# EUROPÄISCHE PATENTANMELDUNG

(11) **EP 4 804 116 A1**
(43) Veröffentlichungstag der Anmeldung: **09.09.2026**
(21) Anmeldenummer: 25162054.8
(22) Anmeldetag: 06.03.2025
(51) Int. Cl.: G06T 5/50, G06T 5/60, G06T 5/70

(54) **VERFAHREN ZUR RAUSCHREDUZIERUNG VON EINGANGSBILDDATEN**

(71) Anmelder: Siemens Healthineers AG, 91301 Forchheim (DE)
(72) Erfinder: Böhm, Stefan, 90522 Oberasbach (DE); Fabricius, Uwe, 91056 Erlangen (DE)
(74) Vertreter: Siemens Healthineers Patent Attorneys

(57) **Zusammenfassung**

Ein computerimplementiertes Verfahren zur Rauschreduzierung von mittels eines Bildgebungssystems (29) erzeugten Eingangsbilddaten (1) wird angegeben. Basierend auf den Eingangsbilddaten (1) werden mittels Anwendung eines ersten Rauschreduzierungsalgorithmus (4) erste rauschreduzierte Bilddaten (5) erzeugt, welche für eine Vielzahl von Bildpunkten (2) jeweils einen ersten rauschreduzierten Bildpunktwert (6) aufweisen. Dabei enthält die Anwendung des ersten Rauschreduzierungsalgorithmus (4) eine Anwendung eines trainierten Maschinenlernmodells, MLM, (7) auf von den Eingangsbilddaten (1) abhängige Eingabedaten (8). Zusätzlich wird ein Bildinhalt (9) der Eingangsbilddaten (1) geprüft. Außerdem werden resultierende Bilddaten (11) basierend auf den Eingangsbilddaten (1) erzeugt, wobei die resultierenden Bilddaten (11) für die Vielzahl von Bildpunkten (2) jeweils einen resultierenden Bildpunktwert (12) aufweisen. Dabei ist der jeweilige resultierende Bildpunktwert (12) gegeben durch eine von einem Ergebnis der Prüfung abhängigen Kombination (13) des jeweiligen ersten rauschreduzierten Bildpunktwerts (6) und eines jeweiligen weiteren Bildpunktwerts (14).

## Beschreibung

Die vorliegende Erfindung betrifft ein computerimplementiertes Verfahren zur Rauschreduzierung von mittels eines Bildgebungssystems erzeugten Eingangsbilddaten. Außerdem betrifft die Erfindung ein entsprechendes Bildgebungsverfahren, ein entsprechendes Datenverarbeitungssystem, eine Bildgebungsvorrichtung und ein Computerprogrammprodukt.

Mittels eines Bildgebungssystems erzeugte Eingangsbilddaten können durch einen Bildgebungsprozess ein Rauschen, zum Beispiel ein inherentes Quantenrauschen, aufweisen. Eine Bildqualität der Eingangsbilddaten kann beispielsweise im Falle von Eingangsbilddaten, die mithilfe einer Strahlungsquelle erzeugt wurden, mit abnehmender applizierter Dosis der Strahlungsquelle für ein Einzelbild der Eingangsbilddaten abnehmen. Ein Ziel moderner Bildverbesserungsverfahren ist es, das Rauschen bei möglichst gleichzeitiger Erhaltung einer Nutzinformation, zum Beispiel in Form von einem Signal oder einer dargestellten Struktur, zu reduzieren.

Auf sogenannter künstlicher Intelligenz basierende, Kl-basierte, Rauschreduzierungsverfahren, also Verfahren bei denen beispielsweise ein trainiertes Maschinenlernmodell, MLM, auf die Eingangsbilddaten angewendet wird, können gegenüber konventionellen Verfahren in vielen Fällen überlegen sein, da sie in dem Rauschen Strukturen erkennen und die Strukturen von dem Rauschen trennen können. Je niedriger eine vorhandene Bildqualität ist, gekennzeichnet zum Beispiel durch ein geringes Signal-Rausch-Verhältnis, SNR, desto mehr gelingt dem Kl-basierten Rauschreduzierungsverfahren die Erkennung der Strukturen nur durch stark interpretatives Erkennen. Dies kann dazu führen, dass scheinbare Strukturen im Rauschen als Nutzsignal erkannt, verstärkt und dargestellt werden, obwohl es sich tatsächlich nicht um reale Strukturen sondern um Rauschen handelt. Dieses Phänomen kann mit dem bei MLM Technologien bekannten Phänomen des Halluzinierens zusammenhängen. Diese Art von Halluzinieren ist visuell beispielsweise bei bewegten Bildserien, wie zum Beispiel bei Bildserien, die im Rahmen einer Fluoroskopie erzeugt werden, wahrnehmbar. Die scheinbaren Strukturen können sich dann von Bild zu Bild verändern und auf einen Betrachter störend wirken. Als Folge kann das Kl-basierte Rauschreduzierungsverfahren nicht in vollem Umfang sinnvoll angewendet werden.

Kl-basierte Bildverarbeitungsverfahren sind im Stand der Technik bekannt, z.B. aus der Veröffentlichung von S. Hariharan et al.: "Learning-based X-ray Image Denoising Utilizing Model-based Image Simulations", in Shen, D., et al.: "Medical Image Computing and Computer Assisted Intervention - MICCAI 2019.", MICCAI 2019, Lecture Notes in Computer Science, vol. 11769, Springer, Cham, und aus der Veröffentlichung von O. Ronneberger et al.: "U-Net: Convolutional Networks for Biomedical Image Segmentation" (arXiv:1505.04597).

Eine Aufgabe der vorliegenden Erfindung besteht darin, eine Rauschreduzierung von mittels eines Bildgebungssystems erzeugten Eingangsbilddaten im Hinblick auf die beschriebenen Nachteile zu verbessern.

Diese Aufgabe wird durch den jeweiligen Gegenstand des unabhängigen Anspruchs gelöst. Vorteilhafte Weiterbildungen und bevorzugte Ausführungsformen sind Gegenstand der abhängigen Ansprüche, der folgenden Beschreibung sowie der Figuren.

Die Erfindung beruht auf dem Gedanken, zur Rauschreduzierung für einzelne Bildpunkte jeweils einen rauschreduzierten Bildpunktwert mit einem weiteren Bildpunktwert zu kombinieren, wobei die Kombination abhängig von einem Bildinhalt der Eingangsbilddaten durchgeführt wird.

Gemäß einem Aspekt der Erfindung wird ein computerimplementiertes Verfahren zur Rauschreduzierung von mittels eines Bildgebungssystems erzeugten Eingangsbilddaten vorgestellt. Es werden basierend auf den Eingangsbilddaten mittels Anwendung eines ersten Rauschreduzierungsalgorithmus erste rauschreduzierte Bilddaten erzeugt, welche für eine Vielzahl von Bildpunkten jeweils einen ersten rauschreduzierten Bildpunktwert aufweisen. Dabei enthält die Anwendung des ersten Rauschreduzierungsalgorithmus eine Anwendung eines Maschinenlernmodells, MLM, insbesondere eines trainierten MLM, beispielsweise eines zur Rauschreduzierung trainierten MLM, auf von den Eingangsbilddaten abhängige Eingabedaten. Zusätzlich wird ein Bildinhalt der Eingangsbilddaten gemäß einer vorbestimmten Prüfvorschrift geprüft. Weiterhin werden resultierende Bilddaten basierend auf den Eingangsbilddaten erzeugt, wobei die resultierenden Bilddaten für die Vielzahl von Bildpunkten jeweils einen resultierenden Bildpunktwert aufweisen. Dabei ist für jeden Bildpunkt der Vielzahl von Bildpunkten der jeweilige resultierende Bildpunktwert gegeben durch eine von einem Ergebnis der Prüfung abhängige Kombination des jeweiligen ersten rauschreduzierten Bildpunktwerts und eines jeweiligen weiteren Bildpunktwerts, der abhängig ist von den Eingangsbilddaten.

Sofern nicht anders angegeben, können alle Schritte des computerimplementierten Verfahrens von einem Datenverarbeitungssystem durchgeführt werden, welches wenigstens ein Datenverarbeitungsgerät aufweist, insbesondere von einem Datenverarbeitungssystem einer Bildgebungsvorrichtung. Insbesondere ist das wenigstens eine Datenverarbeitungsgerät zur Durchführung der Schritte des computerimplementierten Verfahrens konfiguriert oder angepasst. Hierzu kann das wenigstens eine Datenverarbeitungsgerät beispielsweise ein Computerprogramm speichern, das Befehle beinhaltet, die bei Ausführung durch das wenigstens eine Datenverarbeitungsgerät das wenigstens eine Datenverarbeitungsgerät dazu veranlassen, das computerimplementierte Verfahren auszuführen. Die Begriffe "Datenverarbeitungssystem" und "wenigstens ein Datenverarbeitungsgerät" können austauschbar verwendet werden.

Für den Fall, dass das wenigstens eine Datenverarbeitungsgerät zwei oder mehr Datenverarbeitungsgeräte beinhaltet, können bestimmte Schritte, die mittels des wenigstens einen Datenverarbeitungsgeräts durchgeführt werden, zum Beispiel so verstanden werden, dass verschiedene Datenverarbeitungsgeräte verschiedene Schritte oder verschiedene Teile eines Schrittes durchführen. Insbesondere ist es nicht erforderlich, dass jedes Datenverarbeitungsgerät die Schritte vollständig durchführt. Mit anderen Worten kann die Durchführung der Schritte auf die zwei oder mehr Datenverarbeitungsgeräte verteilt sein.

Aus jeder Ausführungsform des computerimplementierten Verfahrens ergibt sich eine entsprechende Ausführungsform eines Verfahrens zur Rauschreduzierung, das nicht rein computerimplementiert ist, indem entsprechende Schritte zur Erzeugung der resultierenden Bilddaten einbezogen werden.

Beispielsweise, aber nicht zwingend, weisen die Eingangsbilddaten für die Vielzahl von Bildpunkten jeweils einen Eingangsbildpunktwert auf. Insbesondere ist es aber nicht zwingend erforderlich, dass für jeden Bildpunkt der Eingangsbilddaten auch ein oder genau ein rauschreduzierter Bildpunktwert in den rauschreduzierten Bilddaten existiert. Dies kann möglicherweise dann nicht der Fall sein, wenn der erste Rauschreduzierungsalgorithmus eine Veränderung der Auflösung ("Upsampling / Downsampling") beinhaltet, der erste Rauschreduzierungsalgorithmus auf bestimmte Bildbereiche der Eingangsbilddaten, beispielsweise Randbereiche, nicht angewendet wird, die Anwendung des ersten Rauschreduzierungsalgorithmus auf bestimmte Bildbereiche der Eingangsbilddaten beschränkt wird, und so weiter. Entsprechendes gilt analog für die weiteren Bildpunktwerte.

Beispielsweise kann der jeweilige weitere Bildpunktwert abhängig sein von dem jeweiligen Eingangsbildpunktwert.

Die Eingangsbilddaten können beispielsweise einen oder mehrere Datensätze beinhalten, die Einzelbildern oder Bildserien entsprechen. Insbesondere können die Eingangsbilddaten Videodaten enthalten. Insbesondere können die Eingangsbilddaten zweidimensionale Bilddaten oder dreidimensionale Bilddaten enthalten. Insbesondere kann ein erster Einzelbilddatensatz der Eingangsbilddaten dieselbe Vielzahl von Bildpunkten, insbesondere entsprechend derselben räumlichen Anordnung, enthalten wie ein zweiter Einzelbilddatensatz der Eingangsbilddaten oder wie jeder weitere Einzelbilddatensatz der Eingangsbilddaten.

Unter einem Bildpunkt ist beispielsweise ein Pixel oder Voxel zu verstehen. Ein Eingangsbildpunktwert, ein erster rauschreduzierter Bildpunktwert und/oder ein weiterer Bildpunktwert kann beispielsweise einen Zahlenwert annehmen, der einem Grauwert oder Farbwert an der Stelle des entsprechenden Bildpunktes darstellt.

Insbesondere enthalten die Eingangsbilddaten ein höheres Maß an Bildrauschen als die ersten rauschreduzierten Bilddaten. Als Bildrauschen kann eine Verschlechterung eines aufgenommenen Bildes durch Störungen, die keinen Bezug zum Bildinhalt haben, bezeichnet werden. Das Bildrauschen kann dabei für die Vielzahl von Bildpunkten jeweils unterschiedlich hoch sein und insbesondere von einem Bildpunktwert einer tatsächlich darzustellenden Struktur abweichen. Ein Signal-Rausch-Verhältnis kann als Maß für das Bildrauschen herangezogen werden. Der Bildinhalt kann insbesondere die tatsächlich darzustellende Struktur enthalten.

Ein trainiertes MLM kann als Algorithmus, insbesondere computerimplementierter Algorithmus, aufgefasst werden, der konkrete oder im weiteren Sinne durch menschliche Verstandesleistungen mögliche Funktionen nachstellen kann. Ein trainiertes MLM kann beispielsweise auch als "trainierte Funktion" bezeichnet werden. Ein trainiertes MLM kann in Software und/oder Hardware implementiert sein.

Beim Trainieren eines MLM werden im Allgemeinen Parameter des MLM angepasst oder aktualisiert. Das Trainieren kann überwacht, halb-überwacht oder unüberwacht erfolgen. Das Trainieren kann auch Verstärkungslernen (englisch: reinforcement learning) oder Repräsentationslernen (englisch: representation learning) beinhalten und/oder weitere bekannte Trainingsmethoden. Insbesondere können die Parameter des MLM iterativ über mehrere Trainingsschritte hinweg angepasst werden. Insbesondere kann zum Trainieren eine vordefinierte Verlustfunktion minimiert werden. Zum Anpassen der Parameter kann, falls es sich bei dem MLM um ein künstliches neuronales Netzwerk, ANN (englisch: artificial neural network), handelt, beispielsweise ein Rückpropagationsalgorithmus (englisch: backpropagation) verwendet werden.

Ein MLM kann insbesondere ein ANN, eine Support-Vector-Maschine, einen k-means-Klusteralgorithmus, einen Entscheidungsbaum, und so weiter beinhalten. Insbesondere kann ein ANN ein tiefes neuronales Netzwerk und/oder ein faltendes neuronales Netzwerk, CNN (englisch: convolutional neural network), insbesondere ein tiefes CNN, und/oder ein rekurrentes neuronales Netzwerk, RNN, insbesondere ein rekurrentes CNN, und/oder ein Transformernetzwerk und/oder ein generatives adversariales Netzwerk, GAN, sein oder beinhalten.

Insbesondere kann das trainierte Maschinenlernmodell ein zur Rauschreduzierung trainiertes MLM enthalten oder sein. Dazu kann insbesondere ein MLM verwendet werden, das auf einem der eingangs genannten Architekturen basiert.

Die Eingabedaten können beispielsweise die Eingangsbilddaten beinhalten oder abhängig von den Eingangsbilddaten durch Vorverarbeitung erzeugt werden.

Der Bildinhalt der Eingangsbilddaten kann insbesondere das in den Eingangsbilddaten dargestellte sein. Insbesondere kann der Bildinhalt durch die Eingangsbildpunktwerte der Vielzahl von Bildpunkten gegeben sein. Die Prüfung des Bildinhalts der Eingangsbilddaten kann beispielsweise für jeden Bildpunkt individuell durchgeführt werden. Beispielsweise kann dazu der jeweilige Eingangsbildpunktwert oder eine daraus ermittelte Größe mit einem vorbestimmten Schwellwert verglichen werden. Abhängig von dem Ergebnis des Vergleichs kann dann der jeweilige resultierende Bildpunktwert erzeugt werden.

Es ist auch möglich, dass gemäß der Prüfvorschrift die Gesamtheit der Eingangsbilddaten oder die Gesamtheit der Eingangsbildpunktwerte der Vielzahl von Bildpunkten geprüft wird. Es ist ferner möglich, dass gemäß der Prüfvorschrift bestimmte definierte Teile oder Teilbereiche der Vielzahl von Bildpunkten einzeln bezüglich der Eingangsbildpunktwerte geprüft werden. Beispielsweise kann die Vielzahl von Bildpunkten in mehrere Fenster oder Teilbereiche aufgeteilt werden und gemäß der Prüfvorschrift die Fenster oder Teilbereiche einzeln bezüglich der Eingangsbildpunktwerte geprüft werden.

Die resultierenden Bilddaten können beispielsweise genau einem resultierenden Einzelbild oder Einzelbilddatensatz entsprechen. Die Vielzahl von Bildpunkten der resultierenden Bilddaten kann beispielsweise der Vielzahl von Bildpunkten des ersten Einzelbilds der Eingangsbilddaten entsprechen, insbesondere hinsichtlich ihrer Anzahl und räumlichen Anordnung.

Die Kombination des jeweiligen ersten rauschreduzierten Bildpunktwerts und des jeweiligen weiteren Bildpunktwerts hängt von dem Ergebnis der Prüfung ab und damit insbesondere von dem Bildinhalt der Eingangsbilddaten. Beispielsweise kann für einen ersten Bildpunkt der resultierende Bildpunktwert abhängig von dem Bildinhalt der Eingangsbilddaten dem jeweiligen ersten rauschreduzierten Bildpunktwert entsprechen. Alternativ oder zusätzlich kann für einen zweiten Bildpunkt der resultierende Bildpunktwert dem entsprechenden jeweiligen weiteren Bildpunktwert entsprechen. Ebenso kann für einen dritten Bildpunkt der resultierende Bildpunktwert anteilig den jeweiligen ersten rauschreduzierten Bildpunktwert und anteilig den jeweiligen weiteren Bildpunktwert enthalten. Die Kombination kann abhängig von dem Ergebnis der Prüfung auch einem der Grenzfälle entsprechen, dass die Kombination für den jeweiligen Bildpunkt gleich dem jeweiligen rauschreduzierten Bildpunktwert ist oder gleich dem weiteren Bildpunktwert.

Damit kann eine vom Bildinhalt der Eingangsbilddaten abhängige Rauschreduzierung eines jeweiligen Bildpunktwerts realisiert werden. Insbesondere kann ein Signal-Rausch-Verhältnis der resultierenden Bilddaten höher sein oder deutlich höher sein als das Signal-Rausch-Verhältnis der Eingangsbilddaten.

Ein Vorteil der Erfindung ist, dass abhängig vom Bildinhalt die Rauschreduzierung der Eingangsbilddaten für jeden Bildpunkt der Vielzahl von Bildpunkten einzeln durchgeführt werden kann. Insbesondere eröffnet sich damit eine Möglichkeit, Schwachstellen des ersten Rauschreduzierungsalgorithmus für eine Erhöhung einer Qualität der resultierenden Bilddaten auszublenden. Insbesondere kann damit ein Halluzinieren, das bei der Anwendung des trainierten Maschinenlernmodells auftreten kann, reduziert werden. Da der erste Rauschreduzierungsalgorithmus auf die von den Eingangsbilddaten abhängigen Eingabedaten angewendet wird und im Anschluss die resultierenden Bilddaten selektiv erzeugt werden, ist das Verfahren flexibel in einer Auswahl des ersten Rauschreduzierungsalgorithmus. Insbesondere kann die Kombination des jeweiligen ersten rauschreduzierten Bildpunktwerts und des jeweiligen weiteren Bildpunktwerts individuell für jeden Bildpunkt so gewählt werden, wie es entsprechend der Prüfvorschrift abhängig von dem Bildinhalt für die jeweilige Anwendung besonders vorteilhaft ist. Insbesondere kann der erste Rauschreduzierungsalgorithmus ein räumlicher, also zeitunabhängiger, Rauschreduzierungsalgorithmus sein.

Gemäß zumindest einer Ausführungsform werden basierend auf den Eingangsbilddaten mittels Anwendung eines zweiten Rauschreduzierungsalgorithmus zweite rauschreduzierte Bilddaten erzeugt. Dabei weisen die zweiten rauschreduzierten Bilddaten für die Vielzahl von Bildpunkten jeweils einen zweiten rauschreduzierten Bildpunktwert auf. Weiterhin ist der jeweilige weitere Bildpunktwert gegeben durch den jeweiligen zweiten rauschreduzierten Bildpunktwert.

Insbesondere kann der zweite Rauschreduzierungsalgorithmus konventionell ausgelegt sein, also ohne Anwendung des trainierten Maschinenlernmodells oder eines weiteren trainierten Maschinenlernmodells. Beispielsweise kann es sich bei dem zweiten Rauschreduzierungsalgorithmus um einen räumlichen und/oder um einen zeitlichen Rauschreduzierungsalgorithmus handeln. Insbesondere kann der zweite Rauschreduzierungsalgorithmus einen Temporalentrauscher enthalten.

Es kann beispielsweise abhängig von dem Bildinhalt der Eingangsbilddaten vorteilhaft sein, die resultierenden Bilddaten mittels Anwendung des ersten Rauschreduzierungsalgorithmus zu erzeugen oder die resultierenden Bilddaten mittels Anwendung des zweiten Rauschreduzierungsalgorithmus zu erzeugen oder beide Rauschreduzierungsalgorithmen zu kombinieren. Insbesondere durch die von dem Ergebnis der Prüfung abhängigen Kombination aus dem jeweiligen ersten rauschreduzierten Bildpunktwert und dem jeweiligen zweiten rauschreduzierten Bildpunktwert kann das Signal-Rausch-Verhältnis der resultierenden Bilddaten erhöht werden.

Gemäß zumindest einer weiteren Ausführungsform enthält das trainierte Maschinenlernmodell ein faltendes neuronales Netzwerk, beispielsweise ein U-Net oder ein auf dem U-Net basierendes Netzwerk.

Eine Anwendung des faltenden neuronalen Netzwerks hat sich insbesondere als im Zusammenhang mit Bild-zu-Bild-Algorithmen im Kontext von bildgebenden Verfahren bewährt und ermöglicht eine besonders zuverlässige und effiziente Rauschreduzierung.

Gemäß zumindest einer weiteren Ausführungsform werden basierend auf den Eingangsbilddaten mittels Anwendung einer varianzstabilisierenden Transformation varianzstabilisierte Eingangsbilddaten erzeugt. Außerdem hängen die Eingabedaten von den varianzstabilisierten Eingangsbilddaten ab.

Beispielsweise kann die varianzstabilisierende Transformation eine General Anscombe Transformation (GAT) enthalten.

Die Eingabedaten können insbesondere durch die varianzstabilisierten Eingangsbilddaten gegeben sein oder diese beinhalten. Insbesondere kann für jeden Bildpunkt der Vielzahl von Bildpunkten auch der jeweilige weitere Bildpunktwert abhängig sein von den varianzstabilisierten Eingangsbilddaten.

Das Erzeugen der resultierenden Bilddaten kann dabei insbesondere mittels Anwendung einer inversen varianzstabilisierenden Transformation, beispielsweise einer inversen General Anscombe Transformation (iGAT), stattfinden.

Die Anwendung der varianzstabilisierenden Transformation kann sich aufgrund einer Stabilisierung und/oder einer Normalisierung einer Rauschvarianz vorteilhaft auf ein Ergebnis der Rauschreduzierung durch den ersten Rauschreduzierungsalgorithmus auswirken.

Gemäß zumindest einer weiteren Ausführungsform wird gemäß der vorbestimmten Prüfvorschrift die Prüfung des Bildinhalts abhängig von den varianzstabilisierten Eingangsbilddaten durchgeführt. Der jeweilige weitere Bildpunktwert ist abhängig von den varianzstabilisierten Eingangsbilddaten.

Beispielsweise weisen die varianzstabilisierten Eingangsbilddaten für die Vielzahl von Bildpunkten jeweils einen varianzstabilisierten Bildpunktwert auf. Insbesondere ist der jeweilige weitere Bildpunktwert abhängig von dem jeweiligen varianzstabilisierten Bildpunktwert.

Die Anwendung der varianzstabilisierenden Transformation kann sich aufgrund einer Stabilisierung und/oder einer Normalisierung einer Rauschvarianz vorteilhaft auf ein Ergebnis der Rauschreduzierung durch den zweiten Rauschreduzierungsalgorithmus auswirken.

Gemäß zumindest einer weiteren Ausführungsform weisen die Eingangsbilddaten einen Einzelbilddatensatz auf, welcher insbesondere für die Vielzahl von Bildpunkten jeweils den Eingangsbildpunktwert aufweist. Außerdem weisen die Eingangsbilddaten einen weiteren Einzelbilddatensatz auf, welcher insbesondere für die Vielzahl von Bildpunkten jeweils einen weiteren Eingangsbildpunktwert aufweist. Zudem folgen der Einzelbilddatensatz und der weitere Einzelbilddatensatz zeitlich aufeinander. Außerdem wird gemäß der vorbestimmten Prüfvorschrift der Bildinhalt abhängig von dem Einzelbilddatensatz und dem weiteren Einzelbilddatensatz geprüft.

Ein Einzelbilddatensatz kann beispielsweise einem zweidimensionalen Einzelbild oder einem dreidimensionalen Einzelbild, insbesondere einer dreidimensionalen Bildrekonstruktion, entsprechen. Mit anderen Worten kann ein Einzelbilddatensatz einem Frame entsprechen.

Mit anderen Worten können die Eingangsbilddaten eine Bildserie enthalten, bei der der Einzelbilddatensatz und der weitere Einzelbilddatensatz in zeitlich aufeinanderfolgend aufgenommen wurden. Insbesondere kann dabei eine darzustellende Struktur sowohl durch den Einzelbilddatensatz als auch durch den weiteren Einzelbilddatensatz dargestellt sein. Im Falle einer unveränderten und/oder unbewegten Struktur kann sich der Einzelbilddatensatz beispielsweise lediglich durch das Bildrauschen von dem weiteren Einzelbilddatensatz unterscheiden. Im Falle einer veränderten und/oder bewegten Struktur kann ein Unterschied des entsprechenden Bildpunktwerts zwischen dem Einzelbilddatensatz und dem weitern Einzelbilddatensatz beispielsweise größer sein als ein Unterschied, der durch Bildrauschen hervorgerufen wird. Die Abgrenzung kann durch einen entsprechend gewählten Grenzwert erfolgen.

Eine Ursache für eine veränderte und/oder bewegte Struktur kann beispielsweise eine Bewegung eines abgebildeten Objekts, beispielsweise eines Körpers eines Patienten oder eines Teils des Körpers des Patienten, sein. Insbesondere kann eine bewegte Struktur auch eine Darstellung eines Organs des Patienten enthalten, das beispielsweise durch Atmung oder Herzschlag bewegt wird.

Ein Vorteil dieser Ausführungsformen ist, dass durch die zeitlich aufeinanderfolgenden Einzelbilddatensätze ein erhöhter Informationsgehalt zur Rauschreduzierung der Eingangsbilddaten zur Verfügung steht. Insbesondere kann dadurch eine Darstellung einer sich bewegenden Struktur von einer Darstellung einer unbewegten Struktur unterschieden werden.

Gemäß zumindest einer weiteren Ausführungsform wird gemäß der vorbestimmten Prüfvorschrift abhängig von dem Einzelbilddatensatz und dem weiteren Einzelbilddatensatz für die Vielzahl von Bildpunkten jeweils ein Abweichungswert für eine Abweichung des Einzelbilddatensatzes von dem weiteren Einzelbilddatensatz bestimmt. Außerdem ist die Kombination abhängig von dem jeweiligen Abweichungswert.

Mit anderen Worten kann der Abweichungswert ein Maß sein für eine Abweichung des Einzelbilddatensatzes von dem weiteren Einzelbilddatensatz, insbesondere eine lokal begrenzte Abweichung. Die Abweichung kann dabei beispielsweise durch eine Bewegung der darzustellenden Struktur hervorgerufen werden. Insbesondere kann die Abweichung, die durch die Bewegung der darzustellenden Struktur hervorgerufen wird, größer sein als eine Abweichung, die durch das Bildrauschen des Einzelbilddatensatzes und das Bildrauschen des weiteren Einzelbilddatensatzes hervorgerufen wird. Insbesondere kann der Abweichungswert in bestimmten Ausführungsformen auch als Bewegungswert verstanden werden. Beispielsweise kann der Abweichungswert hoch sein, wenn eine große Abweichung zwischen dem Einzelbilddatensatz und dem weiteren Einzelbilddatensatz vorliegt oder gering sein, wenn eine geringe Abweichung zwischen dem Einzelbilddatensatz und dem weiteren Einzelbilddatensatz vorliegt. Eine hohe Abweichung kann dann insbesondere auf eine Bewegung hinweisen.

Ein Vorteil dieser Ausführungsform ist, dass ein Bildinhalt der Eingangsbilddaten gemäß der vorbestimmten Prüfvorschrift abhängig von dem Abweichungswert kategorisiert werden kann. Beispielsweise können der erste oder der zweite Rauschreduzierungsalgorithmus auf einen Bereich der Eingangsbilddaten angewendet werden abhängig von dem Abweichungswert. Es kann insbesondere vorteilhaft sein, die resultierenden Bilddaten abhängig von einem Abweichungswert zu erzeugen, wenn beispielsweise der erste Rauschreduzierungsalgorithmus für bewegte Strukturen ein besseres oder deutlich besseres Ergebnis erzielt als der zweite Rauschreduzierungsalgorithmus oder umgekehrt.

Gemäß zumindest einer weiteren Ausführungsform wird zur Bestimmung des jeweiligen Abweichungswerts ein Differenzdatensatz aus dem Einzelbilddatensatz und dem weiteren Einzelbilddatensatz bestimmt. Außerdem wird für die Vielzahl von Bildpunkten jeweils eine Varianz abhängig von dem Differenzdatensatz ermittelt. Schließlich hängt der jeweilige Abweichungswert von der jeweiligen Varianz ab.

Der Differenzdatensatz kann dabei beispielsweise derart bestimmt werden, dass für die Vielzahl von Bildpunkten jeweils eine Differenz oder ein Betrag der Differenz des Eingangsbildpunktwerts und des weiteren Eingangsbildpunktwert gebildet wird.

Zur Bestimmung der jeweiligen Varianz kann aus einer Untermenge von Bildpunkten aus der Vielzahl von Bildpunkten, ein Mittelwert der jeweiligen Untermenge gebildet werden. Die Untermenge von Bildpunkten kann sich dabei in einer Umgebung um den jeweiligen Bildpunkt befinden. Die Untermenge von Bildpunkten kann auch als Region-of-Interest (ROI) oder Fenster bezeichnet werden. Auf Basis des Mittelwerts der jeweiligen Untermenge kann für den jeweiligen Bildpunkt die jeweilige Varianz ermittelt werden. Die jeweilige Varianz kann auch als lokale Varianz bezeichnet werden.

Optional kann die jeweilige Varianz auch basierend auf einem rekursiven Ansatz ermittelt werden.

Insbesondere kann die Bestimmung der jeweiligen Varianz eine Normierung auf einen Referenzwert, beispielsweise eine prädizierte Rauschvarianz enthalten. Die prädizierte Rauschvarianz kann beispielsweise durch eine Schätzung einer Rauschpegelfunktion (noise level function estimate, NLFE) bestimmt werden. Die prädizierte Rauschvarianz kann beispielsweise abhängig von Systemparametern des Bildgebungssystems, das die Eingangsbilddaten erzeugt hat, und/oder durch physikalische und/oder statistische Modellbildung berechnet werden. Insbesondere kann die jeweilige normierte Varianz eine Größe sein, die einen Wert größer oder gleich eins annehmen kann.

Wenn der Abweichungswert für einen Bildpunkt im Falle der normierten Varianz beispielsweise einem Wert von eins entspricht oder nahezu entspricht, kann dies darauf hinweisen, dass keine Bewegung an der Stelle vorlag. Im Falle der normierten Varianz kann eine Veränderung oder eine Bewegung innerhalb des Bildpunktes beispielsweise durch einen Abweichungswert erkannt werden, der signifikant größer als eins ist, also insbesondere mindestens um einen vorgegebenen Toleranzwert größer als eins. Es kann aber auch ein kontinuierlicher Übergang zwischen "unbewegt" und "bewegt" abhängig von dem Abweichungswert vorgesehen sein. Ein solches Vorgehen kann insbesondere als Bewegungsdetektor bezeichnet werden.

Ein Vorteil dieser Ausführungsform ist, dass mit dem Abweichungswert ein besonders aussagekräftiges Maß für die Veränderung des Eingangsbildpunktwerts bezüglich des jeweiligen weiteren Eingangsbildpunktwerts angegeben werden kann und abhängig davon eine besonders vorteilhafte Weiterverarbeitung durch Anwendung des ersten und/oder des zweiten Rauschreduzierungsalgorithmus gewählt werden kann.

Gemäß zumindest einer weiteren Ausführungsform hängt die Kombination für die Vielzahl von Bildpunkten jeweils von einer gewichteten Summe des jeweiligen ersten rauschreduzierten Bildpunktwerts und des jeweiligen weiteren Bildpunktwerts ab, insbesondere von einer gewichteten Summe des jeweiligen ersten rauschreduzierten Bildpunktwerts und des jeweiligen zweiten rauschreduzierten Bildpunktwerts. Außerdem hängt wenigstens ein Gewichtungsfaktor der gewichteten Summe von dem Ergebnis der Prüfung ab.

Mit anderen Worten kann zur Bestimmung der Kombination für jeden Bildpunkt der Vielzahl von Bildpunkten die gewichtete Summe des jeweiligen mit einem ersten Gewichtungsfaktor gewichteten ersten rauschreduzierten Bildpunktwerts und des jeweiligen mit einem zweiten Gewichtungsfaktor gewichteten weiteren Bildpunktwerts gebildet werden. Eine Summe des ersten Gewichtungsfaktors und des zweiten Gewichtungsfaktors kann insbesondere gleich eins sein. Damit kann beispielsweise eine Datenintegrität der resultierenden Bilddaten sichergestellt werden. Andere Normierungen sind jedoch ebenfalls möglich.

Ein Vorteil dieser Ausführungsform ist, dass abhängig von der Prüfung für jeden Bildpunkt der Vielzahl von Bildpunkten ein resultierender Bildpunkt bestimmt werden kann, der entweder dem ersten rauschreduzierten Bildpunktwert, oder dem zweiten rauschreduzierten Bildpunktwert oder einer Kombination dieser beiden Bildpunktwerte entspricht. Es kann also eine Zuweisung eines optimalen Rauschreduzierungsalgorithmus vorgenommen werden und ein Übergang berechnet werden.

Gemäß zumindest einer weiteren Ausführungsform hängt der wenigstens eine Gewichtungsfaktor der gewichteten Summe von dem Abweichungswert, insbesondere von der Varianz, ab.

Mit anderen Worten können beispielsweise der erste Gewichtungsfaktor gleich eins und der zweite Gewichtungsfaktor gleich null sein für einen sehr hohen Abweichungswert. Damit kann der für diesen Bildpunkt entsprechende resultierende Bildpunktwert beispielsweise dem ersten rauschreduzierten Bildpunktwert entsprechen. Ebenso können der zweite Gewichtungsfaktor gleich eins und der erste Gewichtungsfaktor gleich null sein für einen sehr geringen Abweichungswert, sodass der für diesen Bildpunkt entsprechende resultierende Bildpunktwert beispielsweise dem weiteren Bildpunkt entspricht. Beispielsweise kann in einem mittleren Bereich des Abweichungswerts ein Übergang vorgegeben sein, bei dem anteilig der erste rauschreduzierte Bildpunktwert und anteilig der weitere Bildpunktwert in den resultierenden Bildpunktwert eingehen. Eine Summe des ersten Gewichtungsfaktors und des zweiten Gewichtungsfaktors kann insbesondere für einen gleichen Abweichungswert gleich eins sein.

Eine Festlegung des ersten Gewichtungsfaktors und/oder des zweiten Gewichtungsfaktors beziehungsweise deren Abhängigkeit von dem Abweichungswert kann beispielsweise durch empirische Verfahren ermittelt werden. Beispielsweise können dazu Bilddaten mittels reproduzierbarer Abläufe wiederholt erzeugt werden und Ergebnisse unter Anwendung des ersten Rauschreduzierungsalgorithmus oder des zweiten Rauschreduzierungsalgorithmus miteinander verglichen werden. Insbesondere kann dazu das Signal-Rausch-Verhältnis der Ergebnisse miteinander verglichen werden. Die reproduzierbaren Abläufe können dann beispielsweise einerseits Bewegung und andererseits Stillstand einer Struktur enthalten. Damit kann der für den jeweiligen Ablauf, also den jeweiligen Abweichungswert, vorteilhafte Rauschreduzierungsalgorithmus mit einem hohen Gewichtungsfaktor versehen werden und der ungünstigere Rauschreduzierungsalgorithmus mit einem geringen Gewichtungsfaktor versehen werden und umgekehrt.

Beispielsweise kann somit eine an eine Bewegung adaptive Rauschreduzierung für jeden Bildpunkt der Vielzahl von Bildpunkten basierend auf den Eingangsbilddaten umgesetzt werden.

Ein Vorteil dieser Ausführungsform ist, dass abhängig von dem Abweichungswert für jeden Bildpunkt der Vielzahl von Bildpunkten adaptiv ein günstiger Rauschreduzierungsalgorithmus ausgewählt werden kann und/oder eine günstige Kombination aus dem ersten und dem zweiten Rauschreduzierungsalgorithmus.

Es kann beispielsweise ein linearer Übergang zwischen dem ersten rauschreduzierten Bildpunktwert und dem weiteren Bildpunktwert vorgesehen sein. Dann gilt insbesondere ${g}_{1} = \left\{\begin{matrix}0 , falls 1 \leq A < {A}_{1} , \\ \left(A-{A}_{1}\right) / \left({A}_{2}-{A}_{1}\right) , falls {A}_{1} < A \leq {A}_{2} \\ 1 , falls A > {A}_{2}\end{matrix}\right.$ ${g}_{2} = \left\{\begin{matrix}1 , falls 1 \leq A < {A}_{1} , \\ \left({A}_{2}-A\right) / \left({A}_{2}-{A}_{1}\right) , falls {A}_{1} < A \leq {A}_{2} \\ 1 , falls A > {A}_{2}\end{matrix}\right.$

**Dabei bezeichnen** *g*₁ den ersten Gewichtungsfaktor, *g*₂ den zweiten Gewichtungsfaktor, *A* den Abweichungswert, *A*₁ einen ersten vorgegebenen Grenzwert und *A*₂ einen zweiten vorgegebenen Grenzwert. Andere, insbesondere nichtlineare, Übergänge sind alternativ auch möglich.

Gemäß zumindest einer weiteren Ausführungsform ist das Bildgebungssystem ein medizinisches Bildgebungssystem.

Insbesondere kann das medizinische Bildgebungssystem einem röntgenbasierten Bildgebungssystem, einem Positronenemissions-Tomographiesystem (PET-System), einem Magnetresonanztomographiesystem (MRT-System), einem Computertomographiesystem (CT-System), einem C-Bogen Bildgebungssystem oder einem klassischen Röntgengerät entsprechen.

Es kann sich bei den Eingangsbilddaten beispielsweise um Patientenbilddaten eines Körpers eines Patienten oder eines Teils eines Körpers eines Patienten handeln. Insbesondere kann der Bildinhalt der Eingangsbilddaten eine Darstellung eines Organs oder eines anderen Körperteils des Patienten enthalten.

Gemäß einem weiteren Aspekt der Erfindung wird ein Bildgebungsverfahren vorgestellt. Dabei werden mittels eines Bildgebungssystems Eingangsbilddaten erzeugt und resultierende Bilddaten gemäß einem erfindungsgemäßen computerimplementierten Verfahren zur Rauschreduzierung basierend auf den Eingangsbilddaten erzeugt.

Gemäß einem weiteren Aspekt der Erfindung wird ein Datenverarbeitungssystem vorgestellt, das dazu eingerichtet ist, ein erfindungsgemäßes computerimplementiertes Verfahren durchzuführen.

In der vorliegenden Offenbarung können die Ausdrücke "Datenverarbeitungssystem" und "wenigstens ein Datenverarbeitungsgerät" austauschbar verwendet werden. Unter einem Datenverarbeitungsgerät kann insbesondere ein Datenverarbeitungsgerät verstanden werden, das einen Verarbeitungsschaltkreis enthält. Das Datenverarbeitungsgerät kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen ebenso wie ein in Hardware implementierter Datenverarbeitungsprozess.

Das Datenverarbeitungsgerät kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Das Datenverarbeitungsgerät kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Das Datenverarbeitungsgerät kann auch einen physischen oder einen virtuellen Verbund von Computern oder sonstigen der genannten Einheiten beinhalten.

In verschiedenen Ausführungsbeispielen beinhaltet das Datenverarbeitungsgerät eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Gemäß einem weiteren Aspekt der Erfindung wird eine Bildgebungsvorrichtung angegeben, aufweisend ein Datenverarbeitungssystem gemäß der Erfindung sowie ein Bildgebungssystem, das dazu eingerichtet ist, die Eingangsbilddaten zu erzeugen.

Weitere Ausführungsformen der erfindungsgemäßen Bildgebungsvorrichtung folgen unmittelbar aus den verschiedenen Ausgestaltungen des erfindungsgemäßen computerimplementierten Verfahrens und umgekehrt. Insbesondere lassen sich einzelne Merkmale und entsprechende Erläuterungen sowie Vorteile bezüglich der verschiedenen Ausführungsformen zu dem erfindungsgemäßen computerimplementierten Verfahren analog auf entsprechende Ausführungsformen der erfindungsgemäßen Bildgebungsvorrichtung übertragen. Insbesondere ist die erfindungsgemäße Bildgebungsvorrichtung zum Durchführen eines erfindungsgemäßen computerimplementierten Verfahrens und/oder Bildgebungsverfahrens ausgebildet und programmiert. Insbesondere führt die erfindungsgemäße Bildgebungsvorrichtung das erfindungsgemäße computerimplementierte Verfahre und/oder Bildgebungsverfahren durch.

Gemäß einem weiteren Aspekt der Erfindung wird ein erstes Computerprogrammprodukt vorgestellt aufweisend erste Befehle, die bei Ausführung durch ein Datenverarbeitungssystem das Datenverarbeitungssystem dazu veranlassen, ein erfindungsgemäßes Verfahren durchzuführen.

Gemäß einem weiteren Aspekt der Erfindung wird ein zweites Computerprogrammprodukt vorgestellt aufweisend zweite Befehle, die bei Ausführung durch eine erfindungsgemäße Bildgebungsvorrichtung die Bildgebungsvorrichtung dazu veranlassen, ein erfindungsgemäßes Bildgebungsverfahren durchzuführen.

Gemäß einem weiteren Aspekt der Erfindung wird ein computerlesbares Speichermedium angegeben, das ein erfindungsgemäßes erstes Computerprogrammprodukt und/oder ein erfindungsgemäßes zweites Computerprogrammprodukt speichert.

Das erste Computerprogrammprodukt, das zweite Computerprogrammprodukt und das computerlesbare Speichermedium sind jeweils Computerprogrammprodukte mit den ersten Befehlen und/oder den zweiten Befehlen.

Die ersten und/oder die zweiten Befehle können beispielsweise als Programmcode vorliegen. Der Programmcode kann beispielsweise als Binärcode oder Assembler und/oder als Quellcode einer Programmiersprache, zum Beispiel C, und/oder als Programmskript, zum Beispiel Python, bereitgestellt sein.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Dabei zeigen
FIG 1 zeigt schematisch eine beispielhafte Ausführungsform einer erfindungsgemäßen Bildgebungsvorrichtung;
FIG 2 ein schematisches Blockdiagramm einer beispielhaften Ausführungsform eines erfindungsgemäßen computerimplementierten Verfahrens zur Rauschreduzierung;
FIG 3 ein schematisches Blockdiagramm einer weiteren beispielhaften Ausführungsform eines erfindungsgemäßen computerimplementierten Verfahrens zur Rauschreduzierung;
FIG 4 ein schematisches Blockdiagramm einer weiteren beispielhaften Ausführungsform eines erfindungsgemäßen computerimplementierten Verfahrens zur Rauschreduzierung;
FIG 5 ein schematisches Blockdiagramm einer weiteren beispielhaften Ausführungsform eines erfindungsgemäßen computerimplementierten Verfahrens zur Rauschreduzierung;
FIG 6 eine schematische Darstellung eines künstlichen neuronalen Netzwerks;
FIG 7 eine schematische Darstellung eines faltenden neuronalen Netzwerks; und
FIG 8 eine schematische Darstellung eines weiteren faltenden neuronalen Netzwerks.

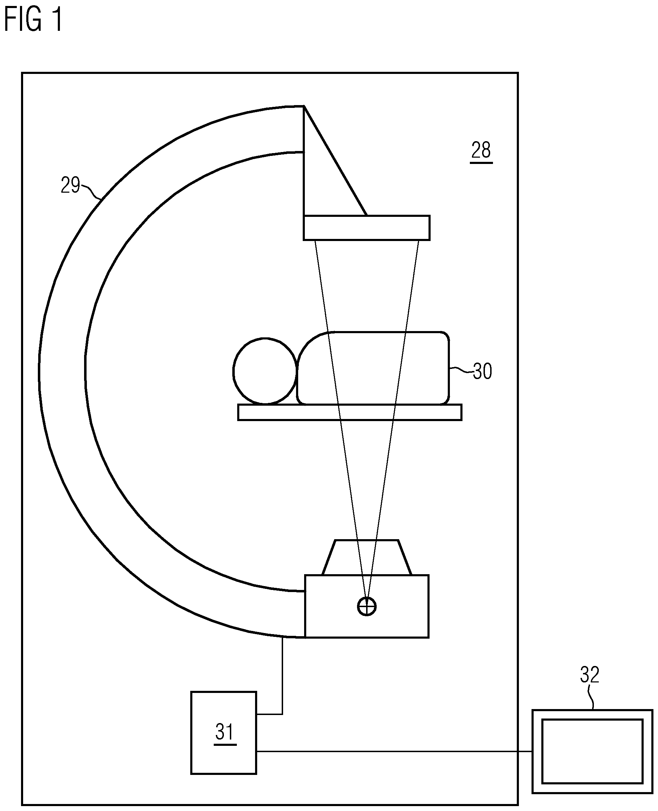

FIG 1 zeigt eine schematische Darstellung einer beispielhaften Ausführungsform einer erfindungsgemäßen Bildgebungsvorrichtung 28. Die Bildgebungsvorrichtung 28 weist ein Datenverarbeitungssystem 31 und ein Bildgebungssystem 29 auf. Das Datenverarbeitungssystem 31 kann dazu eingerichtet sein, die Eingangsbilddaten 1 oder sonstige Bilddaten auf einer Anzeigeeinheit 32 darzustellen. Die Anzeigeeinheit 32 kann in manchen Ausführungsformen auch Teil der Bildgebungsvorrichtung 28 sein. Das Datenverarbeitungssystem 31 ist beispielsweise dazu eingerichtet, ein erfindungsgemäßes computerimplementiertes Verfahren zur Rauschreduzierung der Eingangsbilddaten 1 durchzuführen. Die Anzeigeeinheit 32 ist beispielsweise dazu eingerichtet, die Eingangsbilddaten 1 und/oder resultierende Bilddaten 11 anzuzeigen.

Exemplarisch ist das Bildgebungssystem 29 als C-Arm-Röntgengerät mit einer Röntgenquelle und einem Röntgendetektor dargestellt. Das Bildgebungssystem 29 kann also beispielsweise als CBCT-Gerät ausgestaltet sein. Die folgenden Erläuterungen lassen sich jedoch analog auf andere Bildgebungssysteme 29 übertragen.

Das Objekt 30 kann beispielsweise ein Patient oder ein Körperteil des Patienten sein. Der Patient kann auf einer Patientenliege der Bildgebungsvorrichtung 28 platziert sein.

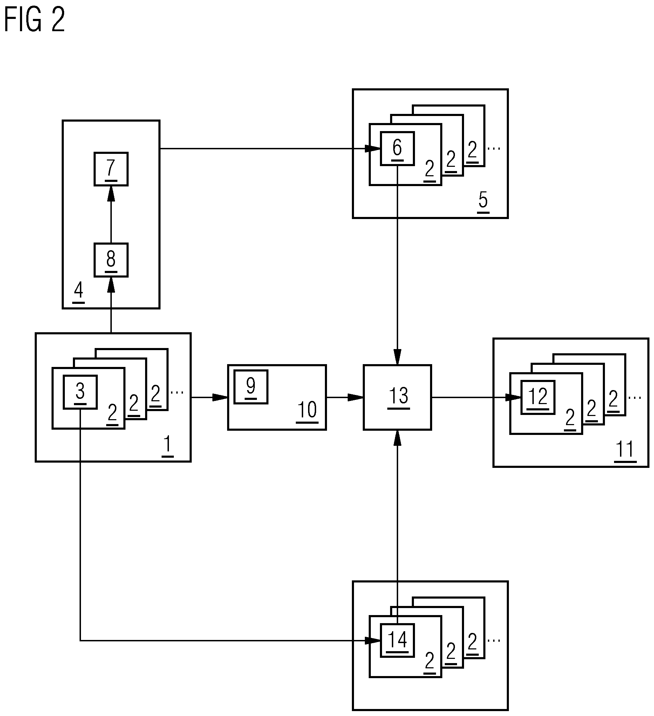

FIG 2 zeigt ein schematisches Blockdiagramm einer beispielhaften Ausführungsform eines erfindungsgemäßen computerimplementierten Verfahrens zur Rauschreduzierung von mittels eines Bildgebungssystems 29 erzeugter Eingangsbilddaten 1. Dabei weisen die Eingangsbilddaten 1 beispielsweise für eine Vielzahl von Bildpunkten 2 jeweils einen Eingangsbildpunktwert 3 auf. Basierend auf den Eingangsbilddaten 1 werden mittels Anwendung eines ersten Rauschreduzierungsalgorithmus 4 erste rauschreduzierte Bilddaten 5 erzeugt, welche für die Vielzahl von Bildpunkten 2 jeweils einen ersten rauschreduzieren Bildpunktwert 6 aufweisen. Die Anwendung des ersten Rauschreduzierungsalgorithmus 4 enthält eine Anwendung eines trainierten Maschinenlernmodells, MLM, 7 auf von den Eingangsbilddaten 1 abhängige Eingabedaten 8. Ein Bildinhalt 9 der Eingangsbilddaten 1 wird gemäß einer vorbestimmten Prüfvorschrift 10 geprüft. Außerdem werden resultierende Bilddaten 11 basierend auf den Eingangsbilddaten 1 erzeugt, wobei die resultierenden Bilddaten 11 für die Vielzahl von Bildpunkten 2 jeweils einen resultierenden Bildpunktwert 12 aufweisen. Dabei ist der jeweilige resultierende Bildpunktwert 12 gegeben durch eine von einem Ergebnis der Prüfung abhängigen Kombination 13 des jeweiligen ersten rauschreduzierten Bildpunktwerts 6 und eines jeweiligen weiteren Bildpunktwerts 14, der abhängig ist von den Eingangsbilddaten 1, beispielsweise von dem jeweiligen Eingangsbildpunktwert 3.

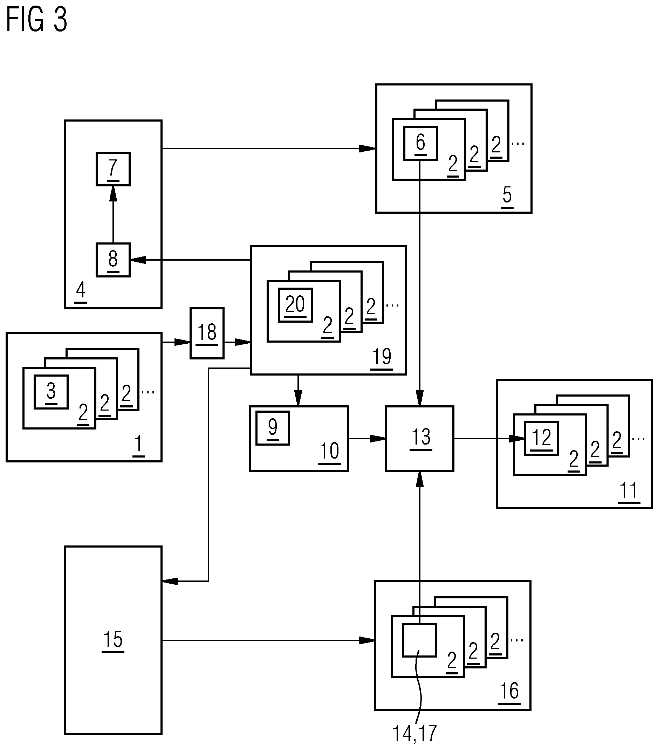

FIG 3 zeigt ein schematisches Blockdiagramm einer weiteren beispielhaften Ausführungsform eines erfindungsgemäßen computerimplementierten Verfahrens zur Rauschreduzierung, die auf der Ausführungsform der FIG 2 basiert. Dabei werden beispielsweise basierend auf den Eingangsbilddaten 1 mittels Anwendung eines zweiten Rauschreduzierungsalgorithmus 15 zweite rauschreduzierte Bilddaten 16 erzeugt. Die zweiten rauschreduzierten Bilddaten 16 weisen für die Vielzahl von Bildpunkten 2 jeweils einen zweiten rauschreduzierten Bildpunktwert 17 auf. Außerdem ist der jeweilige weitere Bildpunktwert 14 gegeben durch den jeweiligen zweiten rauschreduzierten Bildpunktwert 17.

Der zweite Rauschreduzierungsalgorithmus 15 kann dabei beispielsweise ohne eine Anwendung des trainierten Maschinenlernmodells 7 oder eines weiteren trainierten Maschinenlernmodells angewendet werden.

FIG 3 stellt ebenso eine optionale Anwendung einer varianzstabilisierenden Transformation 18 auf die Eingangsbilddaten 1 dar. Durch die Anwendung der varianzstabilisierenden Transformation 18 können beispielsweise varianzstabilisierte Eingangsbilddaten 19 basierend auf den Eingangsbilddaten 1 erzeugt werden. Die varianzstabilisierten Eingangsbilddaten 19 können für die Vielzahl von Bildpunkten 2 jeweils einen varianzstabilisierten Bildpunktwert 20 aufweisen. Insbesondere können die Eingabedaten 8 abhängig sein von den varianzstabilisierten Eingangsbilddaten 19. Ebenso kann die Prüfung des Bildinhalts 9 abhängig sein von den varianzstabilisierten Eingangsbilddaten 19. Die Anwendung des zweiten Rauschreduzierungsalgorithmus 15 kann abhängig sein von den varianzstabilisierten Eingangsbilddaten 19.

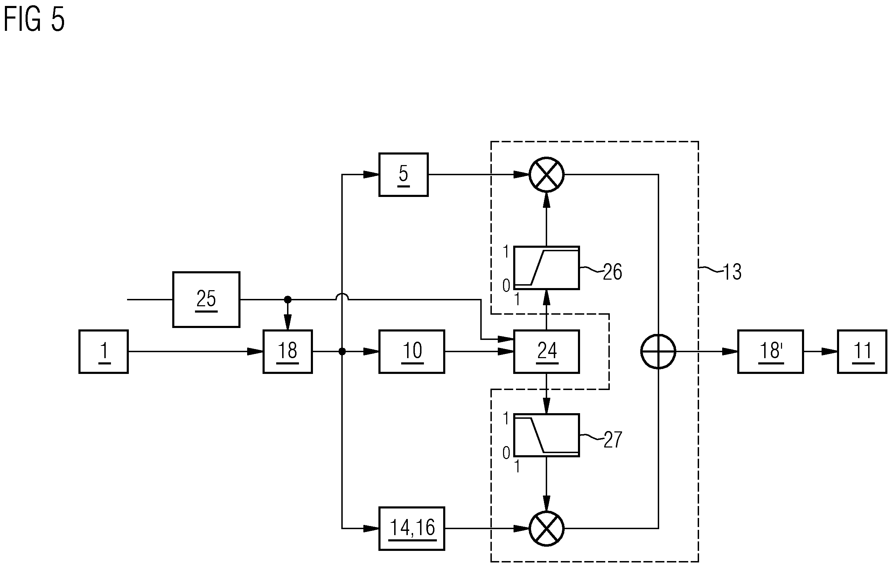

Ebenso kann die Erzeugung der resultierenden Bilddaten 11 eine Anwendung einer inversen varianzstabilisierenden Transformation 18' (siehe auch FIG 5) auf die Kombination 13 enthalten. Im Übrigen können die Erläuterungen zu FIG 2 vollständig oder teilweise für die in FIG 3 dargestellte Ausführungsform gelten.

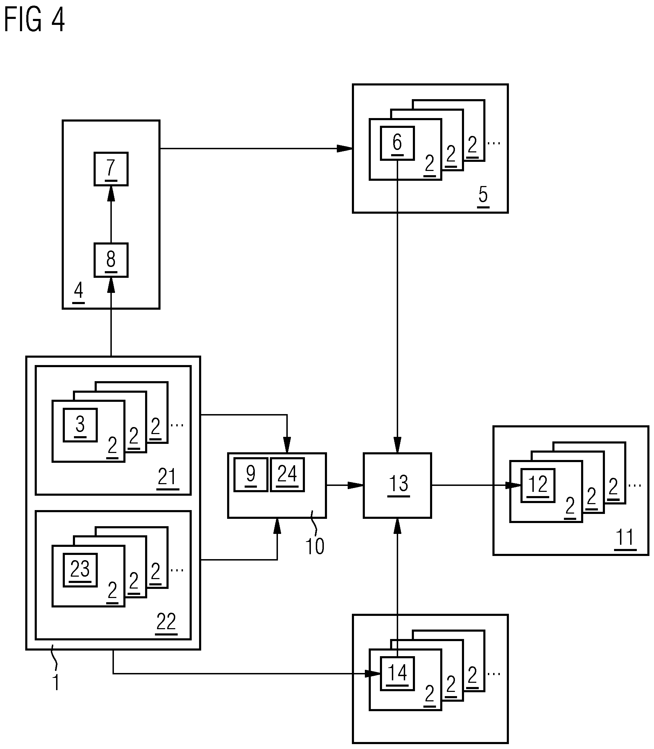

FIG 4 stellt ein schematisches Blockdiagramm einer weiteren beispielhaften Ausführungsform eines erfindungsgemäßen computerimplementierten Verfahrens zur Rauschreduzierung dar. Dabei enthalten die Eingangsbilddaten 1 einen Einzelbilddatensatz 21, welcher insbesondere für die Vielzahl von Bildpunkten 2 jeweils den Eingangsbildpunktwert 3 aufweist. Außerdem enthalten die Eingangsbilddaten 1 einen weiteren Einzelbilddatensatz 22, welcher insbesondere für die Vielzahl von Bildpunkten 2 jeweils einen weiteren Eingangsbildpunktwert 23 aufweist. Insbesondere folgen der Einzelbilddatensatz 21 und der weitere Einzelbilddatensatz 22 zeitlich aufeinander. Außerdem wird der Bildinhalt 9 abhängig von dem Einzelbilddatensatz 21 und dem weiteren Einzelbilddatensatz 22 gemäß der vorbestimmten Prüfvorschrift 10 geprüft.

Insbesondere kann die Prüfung gemäß der vorbestimmten Prüfvorschrift 10 abhängig von dem Einzelbilddatensatz 21 und dem weiteren Einzelbilddatensatz 22 für die Vielzahl von Bildpunkten 2 jeweils einen Abweichungswert 24 für eine Abweichung des Einzelbilddatensatzes 21 von dem weiteren Einzelbilddatensatz 22 ergeben. Die Kombination 13 kann abhängig sein von dem jeweiligen Abweichungswert 24. Insbesondere können die Eingangsbilddaten 1 also eine Bildserie enthalten, bei der der Einzelbilddatensatz 21 und der weitere Einzelbilddatensatz 22 zeitlich aufeinanderfolgen, insbesondere unmittelbar aufeinanderfolgen. Insbesondere enthalten die resultierenden Bilddaten 11 lediglich einen Bilddatensatz. In anderen Worten können die resultierenden Bilddaten 11 lediglich ein Bild aufweisen.

Im Übrigen können die Erläuterungen zu FIG 2 und FIG 3 vollständig oder teilweise für die in FIG 4 dargestellte Ausführungsform gelten.

FIG 5 zeigt ein schematisches Blockdiagramm einer weiteren beispielhaften Ausführungsform eines erfindungsgemäßen computerimplementierten Verfahrens zur Rauschreduzierung. Die Darstellung enthält eine beispielhafte Bestimmung eines Referenzwertes 25, der zum Beispiel als Vergleichsmaß für den Abweichungswert 24 in Form einer prädizierten Rauschvarianz angegeben werden kann. Außerdem kann die Kombination 13 eine gewichtete Summe enthalten. Die gewichtetet Summe kann beispielsweise für jeden Bildpunkt der Vielzahl von Bildpunkten 2 eine erste Gewichtungsfunktion enthalten, die abhängig von dem jeweiligen Abweichungswert 24 einen entsprechenden ersten Gewichtungsfaktor 26 auf den entsprechenden ersten rauschreduzierten Bildpunktwert 6 anwendet. Ebenso kann die gewichtete Summe beispielsweise eine zweite Gewichtungsfunktion enthalten, die abhängig von dem jeweiligen Abweichungswert 24 einen entsprechenden zweiten Gewichtungsfaktor 27 auf den entsprechenden weiteren Bildpunktwert 14 anwendet. Die zweite Gewichtungsfunktion kann dabei direkt aus der ersten Gewichtungsfunktion folgen, sodass insbesondere die Summe aus dem ersten Gewichtungsfaktor 26 und dem zweiten Gewichtungsfaktor 27 stets gleich eins ist. Der jeweilige resultierende Bildpunktwert 12 kann durch eine Summenbildung der beiden mit dem jeweiligen Gewichtungsfaktor 26, 27 gewichteten Bildpunktwerte erzeugt werden.

Zusätzlich zeigt FIG 5 eine Darstellung einer inversen varianzstabilisierenden Transformation 18' zur Erzeugung der resultierenden Bilddaten 11. Im Übrigen können die Erläuterungen zu FIG 2, FIG 3 und FIG 4 vollständig oder teilweise für die in FIG 5 dargestellte Ausführungsform gelten.

Insbesondere können verschiedene Ausführungsformen der Erfindung besonders vorteilhaft sein für eine Darstellung von stehenden Hintergrundstrukturen und bewegten Strukturen auswirken (z.B. stehende Wirbelsäule neben bewegtem Herz, Bein, oder anästhesiertem Schädel). Es wird demnach in dem Bildinhalt 9 insbesondere zwischen stehenden Hintergrundstrukturen und bewegten Strukturen unterschieden. Bei bewegten Strukturen wird dann beispielweise der erste Rauschreduzierungsalgorithmus 4 gebietsweise angewendet und bei stehenden Hintergrundstrukturen beispielsweise der zweite Rauschreduzierungsalgorithmus 15. Aus der Kombination 13 des ersten Rauschreduzierungsalgorithmus 4, beispielsweise eines KI-Entrauschers, mit dem zweiten Rauschreduzierungsalgorithmus 15, beispielsweise eines klassischen Bildverarbeitungsverfahrens zur Entrauschung, ergibt sich ein hybrides Verfahren. Demnach wird lokal oder gebietsadaptiv zwischen zwei Varianten umgeschaltet oder die Varianten werden gewichtet, je nach Zuordnung zu der stehenden Hintergrundstruktur oder der bewegten Struktur. Für den jeweiligen Bildinhalt 9 wird der jeweils beste Entrauscher verwendet. Im Falle von bewegten Strukturen kann das beispielsweise der Kl-Entrauscher sein, da dieser nur auf einem Einzelbilddatensatz 21 (Intraframe) arbeitet. Bei stehenden Hintergrundstrukturen kann beispielsweise ein Temporalentrauscher, der über zwei oder mehr Einzelbilddatensätze 21, 22 hinweg mittelt, besser geeignet sein. Der zweite Rauschreduzierungsalgorithmus 15 kann ein arithmetischer Mittelungsfilter sein oder ein rekursiver, gewichteter Filter (k-Faktor).

Der erste Gewichtungsfaktor 26 und der zweite Gewichtungsfaktor 27 haben beispielsweise einen Wertebereich [0,1] und verhalten sich gegenläufig. Damit kann eine Partitionierung der Eingangsbilddaten 1 in bewegte und stehende Gebiete erfolgen.

Beispielsweise kann ein Differenzdatensatz derart bestimmt werden, dass für die Vielzahl von Bildpunkten 2 jeweils eine Differenz und/oder ein Betrag der Differenz des Eingangsbildpunktwerts 3 und des weiteren Eingangsbildpunktwerts 23 gebildet wird. In dem Differenzdatensatz kann beispielsweise für jeden Bildpunkt eine Untermenge an Bildpunkten der Vielzahl von Bildpunkten 2 in einem Bereich um den Bildpunkt festgelegt werden. Die Untermenge von Bildpunkten kann auch als Region-of-Interest (ROI) oder Fenster bezeichnet werden. Für die Bildpunktwerte der Untermenge an Bildpunkten kann eine Varianz der Untermenge berechnet werden. Die Varianz der Untermenge kann auch als lokale Varianz bezeichnet werden und dem jeweiligen Bildpunkt zugewiesen werden. Alternativ oder zusätzlich kann die lokale Varianz mit einer Rekursionsformel aus einer Vielzahl von benachbarten lokalen Varianzen ermittelt werden. Der Abweichungswert 24 kann der lokalen Varianz entsprechen oder identisch mit dieser sein.

Insbesondere kann die lokale Varianz durch eine prädizierte Rauschvarianz normiert werden, um eine objektive Bewertung der lokalen Varianz zu ermöglichen. Die prädizierte Rauschvarianz kann aus Systemparametern des Bildgebungssystems 29, das die Eingangsbilddaten 1 erzeugt hat, und/oder durch physikalische und/oder statistische Modellbildung berechnet werden. Die prädizierte Rauschvarianz kann auch als Noise Level Function Estimate (NLFE) bezeichnet werden. Die normierte lokale Varianz kann beispielsweise einen Wert annehmen, der größer oder gleich eins ist. Der Wert eins kann bedeuten, dass an dem jeweiligen Bildpunkt eine stehende Struktur dargestellt wird. Je weiter sich der Wert von eins entfernt kann an dem jeweiligen Bildpunkt eine bewegte Struktur dargestellt werden.

Ein erster Gewichtungsfaktor 26 kann abhängig von der normierten lokalen Varianz ermittelt werden. Beispielsweise kann bei einer normierten lokalen Varianz mit einem Wert eins der erste Gewichtungsfaktor 26 einen Wert von null annehmen und bei einer normierten lokalen Varianz mit einem großen Wert der erste Gewichtungsfaktor 26 einen Wert von eins annehmen.

Der zweite Gewichtungsfaktor 27 kann ebenfalls abhängig von der normierten lokalen Varianz ermittelt werden. Beispielsweise kann bei einer normierten lokalen Varianz mit einem Wert eins der zweite Gewichtungsfaktor 27 einen Wert von eins annehmen und bei einer normierten lokalen Varianz mit einem großen Wert der zweite Gewichtungsfaktor 27 einen Wert von null annehmen.

Für jeden Bildpunkt der Vielzahl von Bildpunkten 2 kann mittels der normierten lokalen Varianz der resultierende Bildpunktwert 12 aus einer Summe des ersten rauschreduzierten Bildpunktwerts 6 multipliziert mit dem ersten Gewichtungsfaktor 26 und des zweiten rauschreduzierten Bildpunktwerts 17 multipliziert mit dem zweiten Gewichtungsfaktor 27 ermittelt werden.

Die Bestimmung des Abweichungswerts 24 kann gegebenenfalls auch, beispielsweise die Prüfvorschrift 10 und die Bestimmung des Referenzwertes 25 involvierend, basierend auf einer Frequenzzerlegung erfolgen.

Das zu Anwendung des ersten Rauschreduzierungsalgorithmus 4 angewendete trainierte MLM 7 kann beispielsweise ein künstliches neuronales Netzwerk, ANN, 800 enthalten.

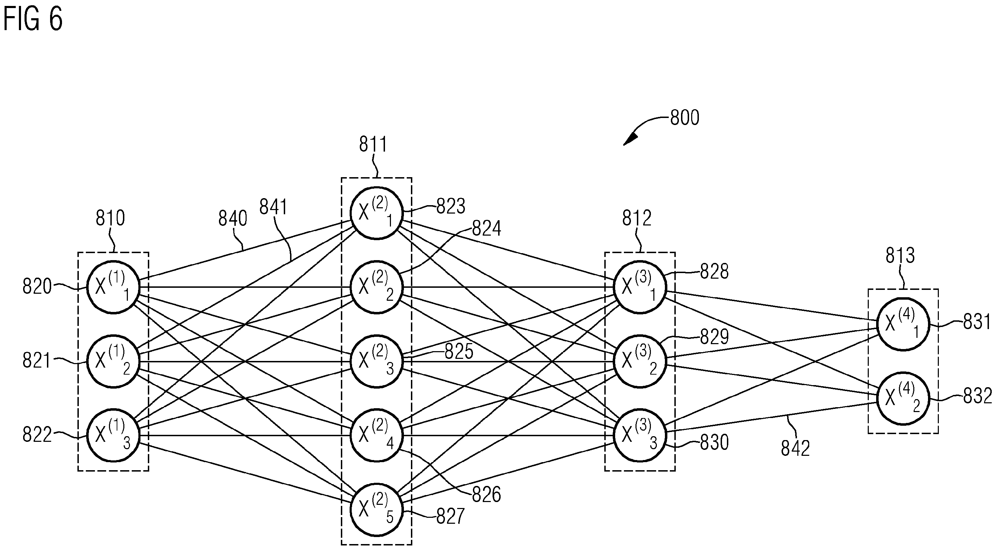

FIG 6 zeigt eine beispielhafte Ausführungsform eines ANN 800. Das ANN 800 umfasst Knoten 820, ..., 832 und Kanten 840, ..., 842, wobei jede Kante 840, ..., 842 eine gerichtete Verbindung von einem ersten Knoten 820, ..., 832 zu einem zweiten Knoten 820, ..., 832 ist. Im Allgemeinen sind der erste Knoten 820, ..., 832 und der zweite Knoten 820, ..., 832 verschiedene Knoten 820, ..., 832. Es ist jedoch auch möglich, dass der erste Knoten 820, ..., 832 und der zweite Knoten 820, ..., 832 identisch sind. In FIG 6 zum Beispiel ist die Kante 840 eine gerichtete Verbindung vom Knoten 820 zum Knoten 823 und die Kante 842 ist eine gerichtete Verbindung vom Knoten 830 zum Knoten 832. Eine Kante 840, ..., 842 von einem ersten Knoten 820, ..., 832 zu einem zweiten Knoten 820, ..., 832 wird auch als eingehende Kante für den zweiten Knoten 820, ..., 832 und als ausgehende Kante für den ersten Knoten 820, ..., 832 bezeichnet.

In diesem Beispiel können die Knoten 820, ..., 832 des ANN 800 in Schichten 810, ..., 813 angeordnet sein, wobei die Schichten eine intrinsische Ordnung aufweisen können, die durch die **Kanten 840,** ..., 842 zwischen den Knoten 820, ..., 832 eingeführt wird. Insbesondere können die Kanten 840, ..., 842 nur zwischen benachbarten Schichten von Knoten bestehen. Im gezeigten Beispiel gibt es eine Eingabeschicht 810, die nur aus den Knoten 820, ..., 822 ohne eingehende Kanten besteht, eine Ausgabeschicht 813, die nur aus den Knoten 831, 832 ohne ausgehende Kanten besteht, und verborgene Schichten 811, 812 zwischen der Eingabeschicht 810 und der Ausgabeschicht 813. Im Allgemeinen kann die Anzahl der verborgenen Schichten 811, 812 beliebig gewählt werden. Bei einem Multilayer-Perceptron, MLP, ist diese Zahl mindestens eins. Die Anzahl der Knoten 820, ..., 822 innerhalb der Eingabeschicht 810 bezieht sich in der Regel auf die Anzahl der Eingabewerte des künstlichen neuronalen Netzwerks 800, und die Anzahl der Knoten 831, 832 innerhalb der Ausgabeschicht 813 bezieht sich in der Regel auf die Anzahl der Ausgabewerte des künstlichen neuronalen Netzwerks 800.

Insbesondere kann jedem Knoten 820, ..., 832 des künstlichen neuronalen Netzwerks 800 eine reelle Zahl als Wert zugewiesen werden. Dabei bezeichnet x⁽ⁿ⁾ᵢ den Wert des i-ten Knotens 820, ..., 832 der n-ten Schicht 810, ..., 813. Die Werte der Knoten 820, ..., 822 der Eingangsschicht 810 entsprechen den Eingangswerten des künstlichen neuronalen Netzwerks 800. Die Werte der Knoten 831, 832 der Ausgangsschicht 813 entsprechen dem Ausgangswert des künstlichen neuronalen Netzwerks 800. Außerdem kann jede Kante 840, ..., 842 ein Gewicht aufweisen, das eine reelle Zahl ist. Insbesondere ist das Gewicht eine reelle Zahl innerhalb des Intervalls [-1, 1] oder innerhalb des Intervalls [0, 1]. Dabei bezeichnet w^{(m,n)}_{i,j} das Gewicht der Kante zwischen dem i-ten Knoten 820, ..., 832 der m-ten Schicht 810, ..., 813 und dem j-ten Knoten 820, ..., 832 der n-ten Schicht 810, ..., 813. Außerdem wird die Abkürzung w⁽ⁿ⁾_{i,j} für das Gewicht w^{(n,n+1)}_{i,j} definiert. Um die Ausgabewerte des neuronalen Netzwerks 800 zu berechnen, werden insbesondere die Eingabewerte durch das neuronale Netzwerk 800 propagiert. Insbesondere können die Werte der Knoten 820, ..., 832 der (n+1)-ten Schicht 810, ..., 813 basierend auf den Werten der Knoten 820, ..., 832 der n-ten Schicht 810, ..., 813 berechnet werden als ${x}_{j}^{\left(n+1\right)} = f \left({\sum }_{i} {x}_{i}^{\left(n\right)} {w}_{i , j}^{\left(n\right)}\right) .$

Darin wird die Funktion f als Übertragungsfunktion oder Aktivierungsfunktion bezeichnet. Bekannte Übertragungsfunktionen sind Stufenfunktionen, Sigmoidfunktionen, zum Beispiel die logistische Funktion, die verallgemeinerte logistische Funktion, der hyperbolische Tangens, die Arkustangensfunktion, die Fehlerfunktion, die Smoothstep-Funktion oder Gleichrichterfunktionen. Die Übertragungsfunktion wird beispielsweise zur Normalisierung verwendet. Insbesondere werden die Werte schichtweise durch das neuronale Netzwerk 800 propagiert, wobei die **Werte der** Eingabeschicht 810 durch die Eingabe des neuronalen Netzwerks 800 gegeben sind, wobei die Werte der ersten verborgenen Schicht 811 auf der Grundlage der Werte der Eingabeschicht 810 des neuronalen Netzwerks 800 berechnet werden können, wobei die Werte der zweiten verborgenen Schicht 812 auf der Grundlage der Werte der ersten verborgenen Schicht 811 berechnet werden können, und so weiter.

Um die Werte w^{(m,n)}_{i,j} für die Kanten festzulegen, muss das neuronale Netzwerk 800 mit Trainingsdaten trainiert werden. Die Trainingsdaten umfassen insbesondere Trainings-Eingangsdaten und Trainings-Ausgangsdaten (bezeichnet als tᵢ). In einem Trainingsschritt wird das neuronale Netzwerk 800 auf die Trainings-Eingangsdaten angewendet, um berechnete Ausgangsdaten zu erzeugen. Insbesondere umfassen die Trainingsdaten und die berechneten Ausgabedaten eine Anzahl von Werten, die der Anzahl der Knoten der Ausgabeschicht entspricht. Insbesondere wird ein Vergleich zwischen den berechneten Ausgabedaten und den Trainingsdaten verwendet, um die Gewichte innerhalb des neuronalen Netzwerks 800 rekursiv anzupassen (Backpropagation-Algorithmus). Insbesondere werden die Gewichte gemäß folgender Formel geändert ${w}_{i , j}^{′ \left(n\right)} = {w}_{i , j}^{\left(n\right)} - γ {δ}_{j}^{\left(n\right)} {x}_{i}^{\left(n\right)} ,$ wobei γ eine vordefinierte Lernrate ist, und die Zahlen δ⁽ⁿ⁾ⱼ rekursiv berechnet werden können als ${δ}_{j}^{\left(n\right)} = \left({\sum }_{k} {δ}_{k}^{\left(n+1\right)} {w}_{j , k}^{\left(n+1\right)}\right) f ′ \left({x}_{i}^{\left(n\right)}{w}_{i , j}^{\left(n\right)}\right)$ basierend auf δ⁽ⁿ⁺¹⁾ⱼ, wenn die (n+1)-te Schicht nicht die Ausgabeschicht 813 ist, und ${δ}_{j}^{\left(n\right)} = \left({x}_{j}^{\left(n+1\right)}-{t}_{j}^{\left(n+1\right)}\right) f ′ \left({x}_{i}^{\left(n\right)}{w}_{i , j}^{\left(n\right)}\right) ,$ wenn die (n+1)-te Schicht die Ausgabeschicht 813 ist, wobei f die erste Ableitung der Aktivierungsfunktion ist, und t⁽ⁿ⁺¹⁾ⱼ der Vergleichs-Trainingswert für den j-ten Knoten der Ausgabeschicht 813 ist.

Das ANN kann in manchen Ausführungsformen als faltendes neuronales Netzwerk, CNN, ausgestaltet sein. Ein CNN ist ein ANN, das in mindestens einer seiner Schichten eine Faltungsoperation anstelle einer allgemeinen Matrixmultiplikation verwendet. Diese Schichten werden als Faltungsschichten bezeichnet. Insbesondere führt eine Faltungsschicht ein Punktprodukt von einem oder mehreren Faltungskernen mit den Eingabedaten der Faltungsschicht durch, wobei die Einträge des einen oder der mehreren Faltungskerne Parameter oder Gewichte sind, die durch Training angepasst werden können. Insbesondere kann man das innere Frobenius-Produkt und die ReLU-Aktivierungsfunktion verwenden. Ein faltendes neuronales Netzwerk kann zusätzliche Schichten umfassen, beispielsweise Pooling-Schichten, vollständig verbundene Schichten und/oder Normalisierungsschichten.

Durch die Verwendung von faltenden neuronalen Netzwerken kann die Eingabe sehr effizient verarbeitet werden, da eine Faltungsoperation, die auf verschiedenen Kerneln basiert, verschiedene Bildmerkmale extrahieren kann, so dass durch die Anpassung der Gewichte des Faltungskernels die relevanten Bildmerkmale während des Trainings bestimmt werden können. Außerdem müssen aufgrund der gemeinsamen Nutzung der Gewichte in den Faltungskernen weniger Parameter trainiert werden, was eine Überanpassung in der Trainingsphase verhindert und ein schnelleres Training oder mehr Schichten im Netzwerk ermöglicht, wodurch die Leistung des Netzwerks verbessert wird.

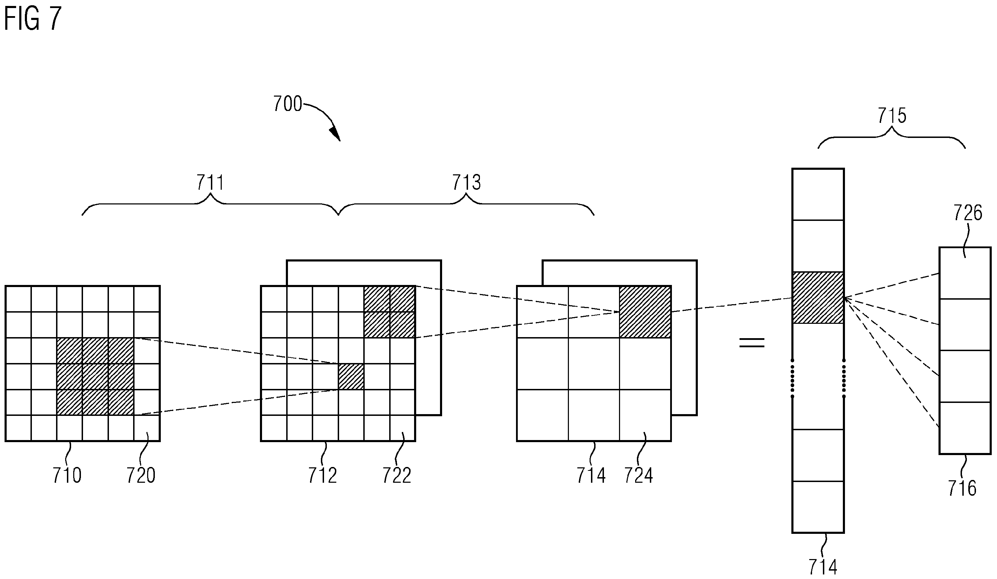

FIG 7 zeigt eine beispielhafte Ausführungsform eines faltenden neuronalen Netzwerks 700. In der dargestellten Ausführungsform umfasst das faltende neuronale Netzwerk 700 eine Eingangsknotenschicht 710, eine Faltungsschicht 711, eine Pooling-Schicht 713, eine vollständig verbundene Schicht 714 und eine Ausgangsknotenschicht 716 sowie verborgene Knotenschichten 712, 714. Alternativ kann das faltende neuronale Netzwerk 700 auch mehrere Faltungsschichten 711, mehrere Pooling-Schichten 713 und/oder mehrere vollständig verbundene Schichten 715 sowie andere Arten von Schichten umfassen. Die Reihenfolge der Schichten kann beliebig gewählt werden, in der Regel werden als letzte Schichten vor der Ausgabeschicht 716 vollständig verbundene Schichten 715 verwendet.

Insbesondere können in einem faltenden neuronalen Netzwerk 700 die Knoten 720, 722, 724 einer Knotenschicht 710, 712, 714 als eine d-dimensionale Matrix oder als ein d-dimensionales Bild betrachtet werden. Insbesondere kann im zweidimensionalen Fall der Wert des mit i und j indizierten Knotens 720, 722, 724 in der n-ten Knotenschicht 710, 712, 714 als x(n)[i, j] bezeichnet werden. Die Anordnung der Knoten 720, 722, 724 einer Knotenschicht 710, 712, 714 hat jedoch als solches keinen Einfluss auf die Berechnungen, die innerhalb des faltenden neuronalen Netzwerks 700 durchgeführt werden, da diese allein durch die Struktur und die Gewichte der Kanten gegeben sind.

Eine Faltungsschicht 711 ist eine Verbindungsschicht zwischen einer vorderen Knotenschicht 710 mit Knotenwerten x(n-1) und einer hinteren Knotenschicht 712 mit Knotenwerten x(n). Eine Faltungsschicht 711 ist insbesondere durch die Struktur und die Gewichte der eingehenden Kanten gekennzeichnet, die eine Faltungsoperation auf der Grundlage einer bestimmten Anzahl von Kernen bilden. Insbesondere sind die Struktur und die Gewichte der Kanten der Faltungsschicht 711 so gewählt, dass die Werte x(n) der Knoten 722 der hinteren Knotenschicht 712 als eine Faltung x(n) = K * x(n-1) auf der Grundlage der Werte x(n-1) der Knoten 720 der vorderen Knotenschicht 710 berechnet werden, wobei die Faltung * im zweidimensionalen Fall definiert ist als ${x}^{\left(n\right)} \left[i, j\right] = \left(K∗{x}^{\left(n-1\right)}\right) \left[i, j\right] = {\sum }_{i ′} {\sum }_{j ′} K \left[i′,j′\right] ⋅ {x}^{\left(n-1\right)} \left[i-i′,j-j′\right] .$

Dabei ist der Kernel K eine d-dimensionale Matrix, im vorliegenden Beispiel eine zweidimensionale Matrix, die in der Regel klein ist im Vergleich zur Anzahl der Knoten 720, 722, beispielsweise eine 3x3 Matrix oder eine 5x5 Matrix. Dies bedeutet insbesondere, dass die Gewichte der Kanten in der Faltungsschicht 711 nicht unabhängig sind, sondern so gewählt werden, dass sie die besagte Faltungsgleichung ergeben. Insbesondere gibt es für einen Kernel, der eine 3x3-Matrix ist, nur 9 unabhängige Gewichte, wobei jeder Eintrag der Kernelmatrix einem unabhängigen Gewicht entspricht, unabhängig von der Anzahl der Knoten 720, 722 in der vorderen Knotenschicht 710 und der hinteren Knotenschicht 712.

Im Allgemeinen verwenden faltende neuronale Netzwerke 700 Knotenschichten 710, 712, 714 mit einer Vielzahl von Kanälen, insbesondere aufgrund der Verwendung einer Vielzahl von Kerneln in den Faltungsschichten 711. In diesen Fällen können die Knotenschichten als (d+1)-dimensionale Matrizen betrachtet werden, wobei die erste Dimension die Kanäle indiziert. Die Wirkung einer Faltungsschicht 711 ist dann in einem zweidimensionalen Beispiel definiert als ${x}_{b}^{\left(n\right)} \left[i, j\right] = {\sum }_{a} \left({K}_{a , b}∗{x}_{a}^{\left(n-1\right)}\left[i, j\right]={\sum }_{a} {\sum }_{i ′} {\sum }_{j ′} {K}_{a , b} \left[i′,j′\right] ⋅ {x}_{a}^{\left(n-1\right)} \left[i-i′,j-j′\right] ,\right.$ wobei ${x}_{a}^{\left(n\right)}$ dem a-ten Kanal der vorhergehenden Kotenschicht 710 entspricht, ${x}_{b}^{\left(n\right)}$ dem b-ten Kanal der nachfolgenden Knotenschicht 712 entspricht und *K_{a,b}* einem der Kernels entspricht. Wenn eine Faltungsschicht 711 auf eine vorhergehende Knotenschicht 710 mit A-Kanälen wirkt und eine nachfolgende Knotenschicht 712 mit B-Kanälen ausgibt, gibt es A·B unabhängige d-dimensionale Kernel *K_{a,b}.*

Im Allgemeinen können in faltenden neuronalen Netzen 700 Aktivierungsfunktionen verwendet werden. In dieser Ausführungsform wird ReLU (rectified linear unit) verwendet, mit R(z) = max(0, z), so dass die Wirkung der Faltungsschicht 711 in dem zweidimensionalen Beispiel ${x}_{b}^{\left(n\right)} \left[i, j\right] = R \left({\sum }_{a} \left({K}_{a , b}∗{x}_{a}^{\left(n-1\right)}\left[i, j\right]\right.\right) = R \left({\sum }_{a} {\sum }_{i ′} {\sum }_{j ′} {K}_{a , b} \left[i′,j′\right] ⋅ {x}_{a}^{\left(n-1\right)} \left[i-i′,j-j′\right]\right)$ ist. Es ist auch möglich, andere Aktivierungsfunktionen zu verwenden, beispielsweise ELU (Exponential Linear Unit), LeakyReLU, Sigmoid, Tanh oder Softmax.

In der angezeigten Ausführungsform beinhaltet die Eingabeschicht 710 36 Knoten 720, die in einer zweidimensionalen 6x6-Matrix angeordnet sind. Die erste verborgene Knotenschicht 712 beinhaltet 72 Knoten 722, die als zweidimensionale 6x6-Matrizen angeordnet sind, wobei jede der beiden Matrizen das Ergebnis einer Faltung der Werte der Eingabeschicht mit einem 3x3-Kern innerhalb der Faltungsschicht 711 ist. Äquivalent dazu können die Knoten 722 der ersten versteckten Knotenschicht 712 als eine dreidimensionale 2x6x6-Matrix interpretiert werden, wobei die erste Dimension der Kanaldimension entspricht.

Ein Vorteil der Verwendung von Faltungsschichten 711 besteht darin, dass eine räumlich lokale Korrelation der Eingabedaten ausgenutzt werden kann, indem ein lokales Konnektivitätsmuster zwischen den Knoten benachbarter Schichten erzwungen wird, insbesondere indem jeder Knoten nur mit einem kleinen Bereich der Knoten der vorhergehenden Schicht verbunden ist.

Eine Pooling-Schicht 713 ist eine Verbindungsschicht zwischen einer vorhergehenden Knotenschicht 712 mit Knotenwerten x(n-1) und einer nachfolgenden Knotenschicht 714 mit Knotenwerten x(n). Eine Pooling-Schicht 713 kann insbesondere durch die Struktur und die Gewichte der Kanten und die Aktivierungsfunktion charakterisiert sein, die eine Pooling-Operation auf der Grundlage einer nichtlinearen Pooling-Funktion f bilden. Beispielsweise können im zweidimensionalen Fall die Werte x(n) der Knoten 724 der nachfolgenden Knotenschicht 714 basierend auf den Werten x(n-1) der Knoten 722 der anterioren Knotenschicht 712 wie folgt berechnet werden ${x}_{n}^{\left(n\right)} \left[i, j\right] = f \left({x}_{b}^{\left(n-1\right)}\left[{id}_{1}, {jd}_{2}\right],…,\right. \left.{x}_{b}^{\left(n-1\right)}\left[\left(i+1\right){d}_{1}-1,\left(j+1\right){d}_{2}-1\right]\right) .$

Mit anderen Worten kann durch die Verwendung einer Pooling-Schicht 713 die Anzahl der Knoten 722, 724 reduziert werden, indem eine Anzahl d1-d2 benachbarter Knoten 722 in der vorhergehenden Knotenschicht 712 durch einen einzigen Knoten 722 in der nachfolgenden Knotenschicht 714 ersetzt wird, der als Funktion der Werte der genannten Anzahl benachbarter Knoten berechnet wird. Die Pooling-Funktion f kann insbesondere die Max-Funktion, der Mittelwert oder die L2-Norm sein. Insbesondere sind bei einer Pooling-Schicht 713 die Gewichte der eingehenden Kanten fest und werden durch das Trainieren nicht verändert.

Der Vorteil der Verwendung einer Pooling-Schicht 713 ist, dass die Anzahl der Knoten 722, 724 und die Anzahl der Parameter reduziert wird. Dies führt zu einer Reduzierung des Berechnungsaufwands im Netzwerk und zu einer Kontrolle der Überanpassung.

In der gezeigten Ausführungsform ist die Pooling-Schicht 713 eine Max-Pooling-Schicht, bei der vier benachbarte Knoten durch nur einen Knoten ersetzt werden, wobei der Wert das Maximum der Werte der vier benachbarten Knoten ist. Das Max-Pooling wird auf jede d-dimensionale Matrix der vorherigen Schicht angewendet. In dieser Ausführungsform wird das Max-Pooling auf jede der zweidimensionalen Matrizen angewandt, wodurch die Anzahl der Knoten von 72 auf 18 reduziert wird.

Im Allgemeinen können die letzten Schichten eines faltenden neuronalen Netzwerks 700 vollständig verbundene Schichten 715 sein. Eine vollständig verbundene Schicht 715 ist eine Verbindungsschicht zwischen einer vorhergehenden Knotenschicht 714 und einer nachfolgenden Knotenschicht 716. Eine vollständig verbundene Schicht 713 kann dadurch gekennzeichnet sein, dass eine Mehrheit, insbesondere alle Kanten zwischen den Knoten 714 der vorhergehenden Knotenschicht 714 und den Knoten 716 der nachfolgenden Knotenschicht vorhanden sind, und wobei das Gewicht jeder dieser Kanten individuell angepasst werden kann.

In dieser Ausführungsform sind die Knoten 724 der vorderen Knotenschicht 714 der vollständig verbundenen Schicht 715 sowohl als zweidimensionale Matrizen dargestellt, als auch zusätzlich als nicht zusammenhängende Knoten, die als eine Linie von Knoten angezeigt werden, wobei die Anzahl der Knoten zur besseren Darstellbarkeit reduziert wurde. Dieser Vorgang wird auch als Abflachung (englisch: flattening) bezeichnet. In dieser Ausführungsform ist die Anzahl der Knoten 726 in der nachfolgenden Knotenschicht 716 der vollständig verbundenen Schicht 715 kleiner als die Anzahl der Knoten 724 in der vorhergehenden Knotenschicht 714. Alternativ kann die Anzahl der Knoten 726 auch gleich oder größer sein.

Außerdem wird in dieser Ausführungsform die Softmax-Aktivierungsfunktion innerhalb der vollständig verbundenen Schicht 715 verwendet. Durch die Anwendung der Softmax-Funktion ist die Summe der Werte aller Knoten 726 der Ausgabeschicht 716 gleich 1, und alle Werte aller Knoten 726 der Ausgabeschicht 716 sind reelle Zahlen zwischen 0 und 1. Insbesondere bei Verwendung des faltenden neuronalen Netzwerks 700 zur Kategorisierung von Eingabedaten können die Werte der Ausgabeschicht 716 als die Wahrscheinlichkeit interpretiert werden, dass die Eingabedaten in eine der verschiedenen Kategorien fallen.

Insbesondere können faltende neuronale Netzwerke 700 basierend auf dem Backpropagation-Algorithmus trainiert werden. Um eine Überanpassung zu verhindern, können Verfahren der Regularisierung verwendet werden, beispielsweise das Auslassen von Knoten 720, ..., 724, stochastisches Pooling, die Verwendung künstlicher Daten, Gewichtsabfall basierend auf der L1- oder L2-Norm oder Max-Norm-Beschränkungen.

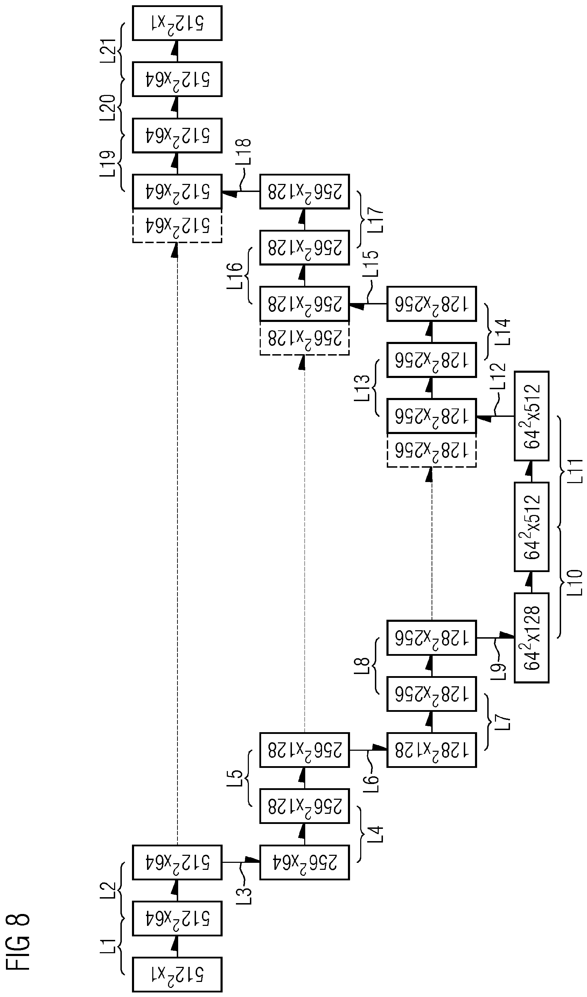

Im Beispiel von FIG 8 ist das MLM 7 ein CNN 700 mit einer U-Net Struktur. In dem gezeigten Beispiel sind die Eingabedaten für das CNN 700 ein zweidimensionales medizinisches Bild mit 512x512 Pixeln, wobei jedes Pixel einen Intensitätswert beinhaltet. Das CNN 700 beinhaltet Faltungsschichten, die durch durchgezogene, horizontale Pfeile dargestellt sind, Pooling-Schichten, die durch durchgezogene, nach unten zeigende Pfeile dargestellt sind, und Upsampling-Schichten, die durch durchgezogene, nach oben zeigende Pfeile dargestellt sind. Die Anzahl der jeweiligen Knoten ist in den Kästen angegeben. Innerhalb der U-Net-Struktur werden zunächst die Eingabebilder heruntergetastet (englisch: downsampling), insbesondere durch Verkleinerung der Bilder und Erhöhung der Anzahl der Kanäle. Anschließend werden sie hochgerechnet (englisch: upsampling), insbesondere durch Vergrößerung der Bilder und Verringerung der Anzahl der Kanäle, um ein transformiertes Bild zu erzeugen.

Alle außer den letzten Faltungsschichten L1, L2, L4, L5, L.7, L8, L10, L11, L13, L14, L16, L17, L19, L20 verwenden 3x3-Kerne mit einem Padding von 1, die ReLU-Aktivierungsfunktion und eine Anzahl von Filtern oder Faltungskernen, die der Anzahl der Kanäle der jeweiligen Knotenschichten entspricht, wie in FIG 6 gezeigt. Die letzte Faltungsschicht verwendet einen 1x1-Kernel ohne Padding und die ReLU-Aktivierungsfunktion.

Die Pooling-Schichten L3, L6, L9 sind Max-Pooling-Schichten, die vier benachbarte Knoten durch nur einen Knoten ersetzen, wobei der Wert das Maximum der Werte der vier benachbarten Knoten ist. Die Upsampling-Schichten L12, L15, L18 sind transponierte Faltungsschichten mit 3x3-Kernen und Stride 2, wodurch sich die Anzahl der Knoten effektiv vervierfacht. Die gestrichelten horizontalen Pfeile entsprechen Verkettungsoperationen, bei denen die Ausgabe einer Faltungsschicht L2, L5, L8 des Downsampling-Zweigs der U-Net-Struktur als zusätzliche Eingaben für eine Faltungsschicht L13, L16, L19 des Upsampling-Zweigs der U-Net-Struktur verwendet wird. Diese zusätzlichen Eingabedaten werden als zusätzliche Kanäle in der Eingangsknotenschicht für die Faltungsschicht L13, L16, L19 des Upsampling-Zweigs behandelt.

Zum Trainieren des CNN wurde eine Datenbank mit 500 ersten medizinischen Bildern verwendet, wobei die jeweilige Segmentierungsmaske basierend auf Annotierungen von Radiologen-Experten erstellt wurde. Insbesondere bestimmten die Experten für jedes der 500 ersten medizinischen Bilder eine Segmentierungsmaske für eine Struktur von Interesse, wobei den Pixeln, die der Struktur von Interesse entsprechen, ein Wert von 1 zugeordnet wurde und den Pixeln, die der Struktur von Interesse nicht entsprechen, ein Wert von 0. Die Datenbank wurde in Trainingsdaten (320 Datensätze), Validierungsdaten (80 Datensätze) und Testdaten (100 Datensätze) aufgeteilt. Zum Trainieren des CNN wurde der Backpropagation-Algorithmus verwendet, basierend auf einer binären Kreuzentropie-Kostenfunktion $L \left(x, y\right) = {\sum }_{i} {\sum }_{j} BCE \left(y\left[i, j\right],M\left(x\right)\left[i, j\right]\right)$ mit $BCE \left(a, b\right) : = - a log \left(b\right) \left(b\right) - \left(1-a\right) log \left(1-b\right) ,$ wobei x ein erstes medizinisches Bild bezeichnet, y die entsprechende Segmentierungsmaske bestimmt, die von dem Radiologieexperten erstellt wurde, und M(x) das Ergebnis der Anwendung des CNN auf das erste medizinische Eingabebild x bezeichnet. Alternativ könnte man auch andere Kostenfunktionen wie gewichtete binäre Kreuzentropie, Focal Loss oder Dice Loss verwenden.

Basierend auf dem Validierungssatz von 80 Datensätzen und den entsprechenden Annotierungen wurde das Modell mit der besten Leistungsfähigkeit aus mehreren maschinellen Lernmodellen (mit unterschiedlichen Hyperparametern, beispielsweise Anzahl der Schichten, Größe und Anzahl der Kerne, Polsterung et cetera) ausgewählt. Die Spezifität und die Sensitivität wurden basierend auf dem Testsatz bestimmt, der 100 Datensätze und die entsprechenden Annotierungen beinhaltet.

In der vorangehenden Beschreibung sollen unabhängig vom grammatikalischen Geschlecht eines bestimmten Begriffes Personen mit männlicher, weiblicher oder anderer Geschlechteridentität jeweils mit umfasst sein.

## Patentansprüche

1. Computerimplementiertes Verfahren zur Rauschreduzierung von mittels eines Bildgebungssystems (29) erzeugten Eingangsbilddaten (1), wobei
- basierend auf den Eingangsbilddaten (1) mittels Anwendung eines ersten Rauschreduzierungsalgorithmus (4) erste rauschreduzierte Bilddaten (5) erzeugt werden, welche für eine Vielzahl von Bildpunkten (2) jeweils einen ersten rauschreduzierten Bildpunktwert (6) aufweisen;
- die Anwendung des ersten Rauschreduzierungsalgorithmus (4) eine Anwendung eines Maschinenlernmodells, MLM, (7) auf von den Eingangsbilddaten (1) abhängige Eingabedaten (8) enthält;
- ein Bildinhalt (9) der Eingangsbilddaten (1) gemäß einer vorbestimmten Prüfvorschrift (10) geprüft wird;
- resultierende Bilddaten (11) basierend auf den Eingangsbilddaten (1) erzeugt werden, wobei die resultierenden Bilddaten (11) für die Vielzahl von Bildpunkten (2) jeweils einen resultierenden Bildpunktwert (12) aufweisen; und
- der jeweilige resultierende Bildpunktwert (12) gegeben ist durch eine von einem Ergebnis der Prüfung abhängige Kombination (13) des jeweiligen ersten rauschreduzierten Bildpunktwerts (6) und eines jeweiligen weiteren Bildpunktwerts (14), der abhängig ist von den Eingangsbilddaten (1).

2. Computerimplementiertes Verfahren nach Anspruch 1, wobei
- basierend auf den Eingangsbilddaten (1) mittels Anwendung eines zweiten Rauschreduzierungsalgorithmus (15) zweite rauschreduzierte Bilddaten (16) erzeugt werden;
- die zweiten rauschreduzierten Bilddaten (16) für die Vielzahl von Bildpunkten (2) jeweils einen zweiten rauschreduzierten Bildpunktwert (17) aufweisen; und
- der jeweilige weitere Bildpunktwert (14) gegeben ist durch den jeweiligen zweiten rauschreduzierten Bildpunktwert (17).

3. Computerimplementiertes Verfahren nach einem der vorherigen Ansprüche, wobei das Maschinenlernmodell (7) ein faltendes neuronales Netzwerk enthält.

4. Computerimplementiertes Verfahren nach einem der vorherigen Ansprüche, wobei
- basierend auf den Eingangsbilddaten (1) mittels Anwendung einer varianzstabilisierenden Transformation (18) varianzstabilisierte Eingangsbilddaten (19) erzeugt werden; und
- die Eingabedaten (8) von den varianzstabilisierten Eingangsbilddaten (19) abhängen.

5. Computerimplementiertes Verfahren nach Anspruch 4, wobei
- gemäß der vorbestimmten Prüfvorschrift (10) die Prüfung des Bildinhalts (9) abhängig von den varianzstabilisierten Eingangsbilddaten (19) durchgeführt wird; und
- der jeweilige weitere Bildpunktwert (14) abhängig ist von den varianzstabilisierten Eingangsbilddaten (1).

6. Computerimplementiertes Verfahren nach einem der vorherigen Ansprüche, wobei
- die Eingangsbilddaten (1) einen Einzelbilddatensatz (21) aufweisen;
- die Eingangsbilddaten (1) einen weiteren Einzelbilddatensatz (22) aufweisen;
- der Einzelbilddatensatz (21) und der weitere Einzelbilddatensatz (22) zeitlich aufeinanderfolgen; und
- gemäß der vorbestimmten Prüfvorschrift (10) der Bildinhalt (9) abhängig von dem Einzelbilddatensatz (21) und dem weiteren Einzelbilddatensatz (22) geprüft wird.

7. Computerimplementiertes Verfahren nach Anspruch 6, wobei
- gemäß der vorbestimmten Prüfvorschrift (10) abhängig von dem Einzelbilddatensatz (21) und dem weiteren Einzelbilddatensatz (22) für die Vielzahl von Bildpunkten (2) jeweils ein Abweichungswert (24) für eine Abweichung des Einzelbilddatensatzes (21) von dem weiteren Einzelbilddatensatz (22) bestimmt wird; und
- die Kombination (13) abhängig ist von dem jeweiligen Abweichungswert (24).

8. Computerimplementiertes Verfahren nach Anspruch 7, wobei zur Bestimmung des jeweiligen Abweichungswerts (24)
- ein Differenzdatensatz aus dem Einzelbilddatensatz (21) und dem weiteren Einzelbilddatensatz (22) bestimmt wird;
- für die Vielzahl von Bildpunkten (2) jeweils eine Varianz abhängig von dem Differenzdatensatz ermittelt wird; und
- der jeweilige Abweichungswert (24) von der jeweiligen Varianz abhängt.

9. Computerimplementiertes Verfahren nach einem der vorherigen Ansprüche, wobei
- die Kombination (13) für die Vielzahl von Bildpunkten (2) jeweils von einer gewichteten Summe des jeweiligen ersten rauschreduzierten Bildpunktwerts (6) und des jeweiligen weiteren Bildpunktwerts (14) abhängt; und
- wenigstens ein Gewichtungsfaktor der gewichteten Summe von dem Ergebnis der Prüfung abhängt.

10. Computerimplementiertes Verfahren nach Anspruch 9 und einem der Ansprüche 7 oder 8, wobei der wenigstens eine Gewichtungsfaktor von dem Abweichungswert (24) abhängt.

11. Computerimplementiertes Verfahren nach einem der vorherigen Ansprüche, wobei das Bildgebungssystem (29) ein medizinisches Bildgebungssystem ist.

12. Bildgebungsverfahren, wobei mittels eines Bildgebungssystems (29) Eingangsbilddaten (1) erzeugt werden und resultierende Bilddaten (11) gemäß einem computerimplementierten Verfahren zur Rauschreduzierung gemäß einem der vorherigen Ansprüche basierend auf den Eingangsbilddaten (1) erzeugt werden.

13. Datenverarbeitungssystem (31), das dazu eingerichtet ist, ein Verfahren gemäß einem der Ansprüche 1 bis 11 durchzuführen.

14. Bildgebungsvorrichtung (28) aufweisend ein Datenverarbeitungssystem (31) gemäß Anspruch 13, sowie ein Bildgebungssystem (29), das dazu eingerichtet ist, die Eingangsbilddaten (1) zu erzeugen.

15. Computerprogrammprodukt, aufweisend
- erste Befehle, die bei Ausführung durch ein Datenverarbeitungssystem (31) das Datenverarbeitungssystem (31) dazu veranlassen, ein Verfahren nach einem der Ansprüche 1 bis 11 durchzuführen; und/oder
- zweite Befehle, die bei Ausführung durch eine Bildgebungsvorrichtung (28) nach Anspruch 14 die Bildgebungsvorrichtung (28) dazu veranlassen, ein Bildgebungsverfahren nach Anspruch 12 durchzuführen.
